# EUROPEAN PATENT APPLICATION

(11) **EP 1 335 306 A2**
(43) Date of publication of application: **13.08.2003**
(21) Application number: 03001993.9
(22) Date of filing: 31.01.2003
(51) Int. Cl.: G06F 17/30

(54) **System for jointly transmitting hypertext content and a UI operation program**

(30) Priority: 08.02.2002 JP 2002032079
(71) Applicant: MATSUSHITA ELECTRIC INDUSTRIAL CO., LTD., Kadoma-shi, Osaka-fu (JP)
(72) Inventor: Fujita, Takahisa, Ikeda-shi, Osaka-fu (JP); Ohto, Hidetaka, Takaraduka-shi, Hyogo-ken (JP)
(74) Representative: Gassner, Wolfgang, Dr.

(57) **Abstract**

A content transmission system capable of realizing UI operations which are adapted to each specific content which is transmitted to a terminal device is provided. In the content transmission system, a content described in hypertext is transmitted from a content server (1) to a terminal device (3) via the network so as to be displayed at the terminal device (3). The content contains program identification information. In the content server (1), a server controlling section (11) transmits the content stored in the content storage section (12) to the terminal device (3), and transmits a UI operation program stored in a program storage section (13). In the terminal device (3), a display processing section (35) displays the content which has been transmitted from the content server (1). A UI operation execution section (34) executes the operations described in the UI operation program which has been transmitted from the content server (1).

## Description

### BACKGROUND OF THE INVENTION

### Field of the Invention

The present invention relates to a content transmission system, and more particularly to a content transmission system in which a media content described in hypertext is transmitted from a server system to a terminal device.

### Description of the Background Art

In recent years, information delivery services are gaining prevalence along with message delivery services of e-mail and the like. As used herein, an information delivery service is a service which allows a media content (hereinafter simply referred to as "a content"), which may be composed of text, images, audio, and/or the like, to be acquired from a server on the WWW (World Wide Web) via the Internet. In general, a content is described in a content format which is compatible with standard techniques used on the Internet, such as HTML (Hyper Text Markup Language) or WML(Wireless Markup Language). A user can view or download a desired content on a server by using a mobile terminal or an information terminal such as a personal computer and using a software application --called a "browser"-- for connecting to a Web server.

A conventional browser is generally composed of a portion including a content displaying section and a portion other than the content displaying section. As used herein, a "content displaying section" refers to an area in which the content data is actually displayed on the screen, whereas the "portion other than the content displaying section" refers to an area which includes a user interface (e.g., menus) which is necessary for operating the browser.

Conventional techniques may enable arbitrary designation of the coloration and layout, etc., of the content displaying section. However, even if the content displaying section changes with diversification of contents, UI (User Interface) operations according to conventional techniques do not change with respect to any browser functions other than those pertaining to the content displaying section.

An example of a content for which changing UI operations would be effective is a shopping service which works on a browser on a mobile terminal. A shopping service typically makes use of a displayed image of a shopping basket in order to allow a user to easily grasp the current purchasing status. Specifically, as the user selects the shopping basket to be displayed, shopping information such as the articles which he/she has designated to purchase and a total of the prices thereof, etc., is displayed on the screen. Conventionally, it has been impossible in such a shopping service to effect changes in its UI operations, e.g., display a shortcut indication for the shopping basket on the screen, add special items to a menu screen of the browser, assign arbitrary keys to specific items, and so on.

According to conventional techniques, it has also been impossible to change functions under specific situations (such as a billing process), e.g., temporarily disabling navigation functions such as "Go Back" or "Go Forward", which are commonly-used UI operations on a browser. As will be appreciated, navigation functions such as "Go Back" and "Go Forward" make use of history information indicating an order in which contents have been displayed on the screen, so as to make it possible to redisplay contents which have been displayed in the past.

### SUMMARY OF THE INVENTION

Therefore, an object of the present invention is to provide a content transmission system which allows UI operations which are adapted to each specific content to be performed.

The present invention has the following features to attain the above object.

A first aspect of the present invention is directed to a content transmission system comprising a server system and a terminal device, in which a content described in hypertext is transmitted from the server system to the terminal device via a network so as to be displayed at the terminal device, wherein the server system includes: a program storage section for storing at least one UI operation program describing an operation concerning a user interface in connection with displaying the content at the terminal device; a content storage section for storing the content, wherein the content contains program identification information for identifying a UI operation program to be executed when the content is displayed at the terminal device; a content transmission section for transmitting the content stored in the content storage section to the terminal device; and a program transmission section for transmitting, in response to a request from the terminal device, one of the at least one UI operation program stored in the program storage section which corresponds to the request, and the terminal device includes: a program acquisition requesting section for making a request to the program transmission section to acquire the UI operation program identified by the program identification information contained in the content transmitted from the content transmission section; a content displaying section for displaying the content transmitted from the content transmission section; and a UI operation execution section for executing the operation described in the UI operation program transmitted from the program transmission section.

Thus, according to the first aspect, at the server system from which a content is transmitted, UI operations to be performed by the terminal device can be set so as to be adapted to the transmitted content. Therefore, in accordance with the present content transmission system, the terminal device can perform UI operations which are adapted to each specific content. Moreover, according to the first aspect, a UI operation program corresponding to a content can be identified within the content. Since a UI operation program corresponding to a content can be thus identified within the content, the server system only needs to store the contents, and there is no need to prepare information for associating contents with UI operation programs. In other words, the structure of the information which needs to be stored in the server system can be simplified.

In a second aspect based on the first aspect, the program identification information is link information indicating a location at which the UI operation program is stored.

In a third aspect based on the first aspect, the terminal device further includes: a default program storage section for storing a default UI operation program; and an identification information determination section for determining whether the content transmitted from the content transmission section contains the program identification information or not, wherein the UI operation execution section executes the operation described in the UI operation program transmitted from the program transmission section if the identification information determination section determines that the program identification information is contained, and executes the operation described in the default UI operation program stored in the default program storage section if the identification information determination section determines that no program identification information is contained.

Thus, according to the third aspect, if a content which contains no program identification information is transmitted, UI operations are executed in accordance with a default UI operation program which is previously prepared. Therefore, it is possible to support both contents containing program identification information and contents containing no program identification information.

In a fourth aspect based on the first aspect, the terminal device further includes: a default identification information storage section for storing program identification information for identifying a default UI operation program; and an identification information determination section for determining whether the content transmitted from the content transmission section contains the program identification information or not, wherein the program acquisition requesting section requests the program transmission section for the UI operation program identified by the program identification information contained in the content transmitted from the content transmission section if the identification information determination section determines that the program identification information is contained, and requests the program transmission section for the default UI operation program identified by the program identification information stored in the default identification information storage section if the identification information determination section determines that no program identification information is contained.

Thus, according to the fourth aspect, if a content which contains no program identification information is transmitted, UI operations are executed in accordance with a default UI operation program which is previously prepared. Therefore, it is possible to support both contents containing program identification information and contents containing no program identification information, as in the third aspect.

In a fifth aspect based on the first aspect, the terminal device further includes a data storage section for storing the content transmitted from the content transmission section and the UI operation program transmitted from the program transmission section, the content displaying section displays the content stored in the data storage section, and the UI operation execution section executes the operation described in the UI operation program stored in the data storage section.

In a sixth aspect based on the fifth aspect, the data storage section is capable of storing a plurality of UI operation programs, the terminal device further including: a storage determination section for determining whether the UI operation program identified by the program identification information contained in the content transmitted from the content transmission section is stored in the data storage section or not, wherein the UI operation execution section executes the operation described in one of the at least one UI operation program stored in the data storage section which is identified by the program identification information contained in the content transmitted from the content transmission section if the storage determination section determines that the UI operation program is stored, and executes the operation described in the UI operation program transmitted from the program transmission section if the storage determination section determines that the UI operation program is not stored.

Thus, according to the sixth aspect, in the case where a UI operation program already stored in the data storage section is to be used, an acquisition request for a UI operation program is not made to the server system. Therefore, the terminal device can acquire a UI operation program in a shorter period of time than in the case where a UI operation program always needs to be acquired from the server system.

In a seventh aspect based on the first aspect, the terminal device further includes: a keyword table storage section for storing a keyword table on which a keyword related to the content is associated with the program identification information for identifying the UI operation program to be executed when the content is displayed at the terminal device; a keyword detection section for detecting a keyword related to the content transmitted from the content transmission section; and a program identification information determination section for determining a unit of program identification information corresponding to the keyword detected by the keyword detection section by referring to the keyword table, wherein the program acquisition requesting section requests the program transmission section for the UI operation program identified by the determined unit of program identification information.

Thus, according to the seventh aspect, a UI operation program to be executed can be determined based on a keyword related to a content. As defined herein, the notion of a "keyword" encompasses a character string contained in a content and/or a character string contained in the URL of a content. Since a UI operation program is determined based on a keyword as such, it is unnecessary to attach any information indicating an associated UI operation program to a content which is transmitted from the server system. Therefore, the effect according to this aspect can be attained without generating a special form of a content at the server system. Thus, the UI operations to be performed at the terminal device can be set in accordance with the transmitted content.

In an eighth aspect based on the first aspect, the content stored in the content storage section contains a plurality of units of program identification information, the terminal device further including: a program identification information selection section for selecting one of the plurality of units of program identification information contained in the content transmitted from the content transmission section based on a predetermined condition, wherein the program acquisition requesting section requests the program transmission section for one of the at least one UI operation program which is identified by the unit of program identification information selected by the program identification information selection section.

Thus, according to the eighth aspect, a content contains a plurality of units of program identification information, from which a UI operation program to be used at the terminal device is selected. As a result, the server system can set different UI operation programs for a given content in accordance with a predetermined condition. As defined herein, the notion of a "predetermined condition" encompasses, for example, a condition concerning a time at which the content is transmitted, a condition concerning the type (mobile phone, PC, PDA, etc.), manufacturer, product name, serial number, or the like of the terminal device, and a condition concerning the language in which the content is described.

In a ninth aspect based on the first aspect, the content stored in the content storage section contains a plurality of units of program identification information, the server system further including: a program identification information selection section for, if the content to be transmitted from the content transmission section contains a plurality of units of program identification information, selecting one of the plurality of units of program identification information based on a predetermined condition; and a deletion section for, if the content to be transmitted from the content transmission section contains a plurality of units of program identification information, deleting from the content any units of program identification information other than the unit of program identification information selected by the program identification information selection section, wherein the content transmission section transmits to the terminal device the content from which any units of program identification information other than the unit of program identification information selected by the program identification information selection section have been deleted by the deletion section.

Thus, according to the ninth aspect, a content contains a plurality of units of program identification information, and a UI operation program to be used is selected at the server system. Therefore, the server system can set different UI operation programs for a given content in accordance with a predetermined condition. Furthermore, since the selection of a UI operation program is made at the server system, the terminal device does not need to have the function of selecting a UI operation program. Therefore, a terminal device which lacks such a special function can also be used in the present content transmission system.

In a tenth aspect based on the first aspect, the server system includes a plurality of servers, the program storage section and the program transmission section are included in one of the plurality of servers, and the content storage section and the content transmission section are included in another of the plurality of servers which is not the server including the program storage section and the program transmission section.

Thus, according to the tenth aspect, a server for storing contents and a server for storing UI operation programs are separately provided, so that these servers can be installed at different physical locations.

An eleventh aspect of the present invention is directed to a content transmission system comprising a server system and a terminal device, in which a content described in hypertext is transmitted from the server system to the terminal device via a network so as to be displayed at the terminal device, wherein the server system includes: a content storage section for storing the content; a program storage section for storing at least one UI operation program describing an operation concerning a user interface in connection with displaying the content at the terminal device; a content table storage section for storing a content table indicating correspondence between the content and a UI operation program to be executed when the content is displayed at the terminal device, a content transmission section for transmitting the content stored in the content storage section to the terminal device; and a program transmission section for, by referring to the content table stored in the table storage section, transmitting one of the at least one UI operation program stored in the program storage section which corresponds to the content transmitted by the content transmission section, the UI operation program being transmitted together with the content, and the terminal device includes: a content displaying section for displaying the content transmitted from the content transmission section; and a UI operation execution section for executing the operation described in the UI operation program transmitted from the program transmission section.

Thus, according to the eleventh aspect, at the server system from which a content is transmitted, a UI operation to be performed at the terminal device can be set in accordance with the transmitted content. Therefore, in accordance with the present content transmission system, the terminal device can perform UI operations which are adapted to each specific content. Moreover, according to the tenth aspect, a content and an associated UI operation program are transmitted simultaneously. In other words, the terminal device does not need to separately acquire a UI operation program from the server system, so that the UI operation program can be acquired within a relatively short period of time.

In a twelfth aspect based on the eleventh aspect, the terminal device further includes: a default program storage section for storing a default UI operation program; and a determination section for determining whether the content transmitted from the content transmission section is accompanied by the UI operation program or not, wherein the UI operation execution section executes the operation described in the UI operation program transmitted from the program transmission section if the determination section determines that the content transmitted from the content transmission section is accompanied by the UI operation program, and executes the operation described in the default UI operation program stored in the default program storage section if the determination section determines that the content transmitted from the content transmission section is not accompanied by the UI operation program.

Thus, according to the twelfth aspect, when a content is transmitted without being accompanied by a UI operation program, UI operations are performed in accordance with a previously prepared default UI operation program. Therefore, it is possible to support both contents accompanied by UI operation programs and contents accompanied by no UI operation programs.

In a thirteenth aspect based on the first or the twelfth aspect, the terminal device further includes: a default program storage section for storing a default UI operation program; and a signature determination section for determining whether a signature is attached to the UI operation program transmitted from the program transmission section or not, the signature being proof of data transmitted from the legitimate server system, wherein the UI operation execution section executes the operation described in the UI operation program transmitted from the program transmission section if the signature determination section determines that the signature is attached, and executes the operation described in the default UI operation program stored in the default program storage section if the determination section determines that the signature is not attached.

Thus, according to the thirteenth aspect, a security check can be performed for a UI operation program which is transmitted from the server system.

A fourteenth aspect of the present invention is directed to a server system for transmitting a content described in hypertext to a terminal device via a network so as to be displayed at the terminal device, wherein the content contains program identification information for identifying a UI operation program to be executed when the content is displayed at the terminal device, the server system comprising: a content storage section for storing the content; a content transmission section for transmitting the content stored in the content storage section to the terminal device; a program storage section for storing at least one UI operation program describing an operation concerning a user interface in connection with displaying the content at the terminal device; and a program transmission section for transmitting, in response to a request from the terminal device, one of the at least one UI operation program stored in the program storage section which corresponds to the request.

A fifteenth aspect of the present invention is directed to a server system for transmitting a content described in hypertext to a terminal device via a network so as to be displayed at the terminal device, the server system comprising: a content storage section for storing the content; a program storage section for storing at least one UI operation program describing an operation concerning a user interface in connection with displaying the content at the terminal device; a content table storage section for storing a content table indicating correspondence between the content and a UI operation program to be executed when the content is displayed at the terminal device, a content transmission section for transmitting the content stored in the content storage section to the terminal device; and a program transmission section for, by referring to the content table stored in the table storage section, transmitting one of the at least one UI operation program stored in the program storage section which corresponds to the content transmitted by the content transmission section, the UI operation program being transmitted together with the content.

A sixteenth aspect of the present invention is directed to a terminal device for receiving a content described in hypertext from a server system via a network, the terminal device comprising: a content displaying section for displaying the content transmitted from the server system; and a UI operation execution section for executing the operation described in the UI operation program transmitted from the server system.

In a seventeenth aspect based on the sixteenth aspect, the terminal device further comprises a program acquisition requesting section for making a request to the program transmission section to acquire the UI operation program identified by the program identification information contained in the content transmitted from the server system.

An eighteenth aspect of the present invention is directed to a method for transmitting a content described in hypertext from a server system to a terminal device via a network, wherein the server system previously stores the content and at least one UI operation program describing an operation concerning a user interface in connection with displaying the content at the terminal device, wherein the content contains program identification information for identifying a UI operation program to be executed when the content is displayed at the terminal device, the method comprising the steps of: transmitting the previously stored content to the terminal device; and in response to a request from the terminal device, transmitting one of the at least one previously stored UI operation program which corresponds to the request.

A nineteenth aspect of the present invention is directed to a method for transmitting a content described in hypertext from a server system to a terminal device via a network, wherein the server system previously stores the content, at least one UI operation program describing an operation concerning a user interface in connection with displaying the content at the terminal device, and a content table indicating correspondence between the content and a UI operation program to be executed when the content is displayed at the terminal device, the method comprising the step of: transmitting the previously stored content to the terminal device, and by referring to the content table, transmitting one of the at least one previously stored UI operation program which corresponds to the content transmitted to the terminal device, the UI operation program being transmitted together with the content.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of a content transmission system according to a first embodiment of the present invention;
FIG. 2 is a diagram illustrating an exemplary description of a content according to the first embodiment;
FIG. 3 is a diagram illustrating an exemplary data acquisition request which is transmitted from a terminal device 3 to a content server 1;
FIG. 4 is a flowchart illustrating an operation of a terminal controlling section 33 according to the first embodiment;
FIG. 5 is a flowchart illustrating an operation of a server controlling section 11 according to the first embodiment;
FIG. 6A, FIG. 6B, FIG. 6C, and FIG. 6D are diagrams illustrating exemplary images displayed by a display device composing an output section 37 according to the first embodiment;
FIG. 7 is a flowchart illustrating another exemplary operation according to the first embodiment;
FIG. 8 is a block diagram illustrating the structure of a content transmission system according to a second embodiment of the present invention;
FIG. 9 is a schematic diagram illustrating the structure of a keyword table;
FIG. 10 is a flowchart illustrating a flow of processes performed by a terminal controlling section 33 according to the second embodiment;
FIG. 11 is a block diagram illustrating the structure of a content transmission system according to a third embodiment of the present invention;
FIG. 12 is a flowchart illustrating an operation of a terminal controlling section 33 according to the third embodiment;
FIG. 13 is a diagram illustrating an exemplary description of a content (HTML document) containing a plurality of units of link information;
FIG. 14 is a block diagram illustrating the structure of a content transmission system according to a variant of the third embodiment;
FIG. 15 is a flowchart illustrating an operation of a content server 1 according to a variant of the third embodiment;
FIG. 16 is a diagram illustrating an exemplary content which is returned from a server-side selection section 141 to a server controlling section 11 shown in FIG. 14;
FIG. 17 is a block diagram illustrating the structure of a content transmission system according to a fourth embodiment of the present invention;
FIG. 18 is a diagram illustrating an exemplary content which is returned from a content server 1 according to the fourth embodiment;
FIG. 19 is a flowchart illustrating an operation of a terminal controlling section 33 according to the fourth embodiment;
FIG. 20 is a block diagram illustrating the structure of a content transmission system according to a fifth embodiment of the present invention;
FIG. 21 is a flowchart illustrating a general operation of the content transmission system shown in FIG. 20;
FIG. 22 is a block diagram illustrating the structure of a content transmission system according to a sixth embodiment of the present invention;
FIG. 23 is a schematic diagram illustrating the structure of a content table according to the sixth embodiment;
FIG. 24 is a flowchart illustrating a flow of processes performed by a terminal controlling section 33 according to a sixth embodiment; and
FIG. 25 is a flowchart illustrating a flow of processes performed by a server controlling section 11 according to the sixth embodiment.

### DESCRIPTION OF THE PREFERRED EMBODIMENTS

### (first embodiment)

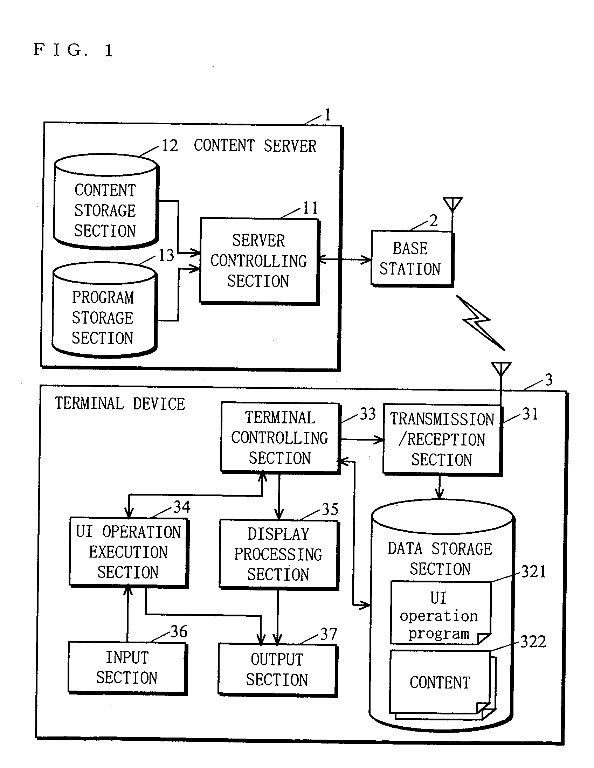

FIG. 1 is a block diagram illustrating the structure of a content transmission system according to a first embodiment of the present invention. In FIG. 1, the present content transmission system comprises a terminal device 3, a content server 1, and a base station 2. Via the base station 2, the terminal device 3 and the content server 1 are coupled so as to be capable of communicating with each other over a wireless network. The coupling between the terminal device 3 and the content server 1 may be realized by a wired network, in which case communications will be made by means of a gateway server, for example, instead of the base station 2. Although the present embodiment illustrates an example where HTTP (HyperText Transfer Protocol) is employed for the communications between the terminal device 3 and the content server 1, any protocol other than HTTP, e.g., WAP (Wireless Application Protocol), may be employed in other embodiments.

Upon receiving a data acquisition request from the terminal device 3, the content server 1 performs a process of transmitting data which is in accordance with the acquisition request. The details of the data to be transmitted from the content server 1 will be described later. The content server 1 is a WWW server which utilizes Web server software such as Apache. The content server 1 comprises a server controlling section 11, a content storage section 12, and a program storage section 13. Hereinafter, the component elements of the content server 1 will be specifically described.

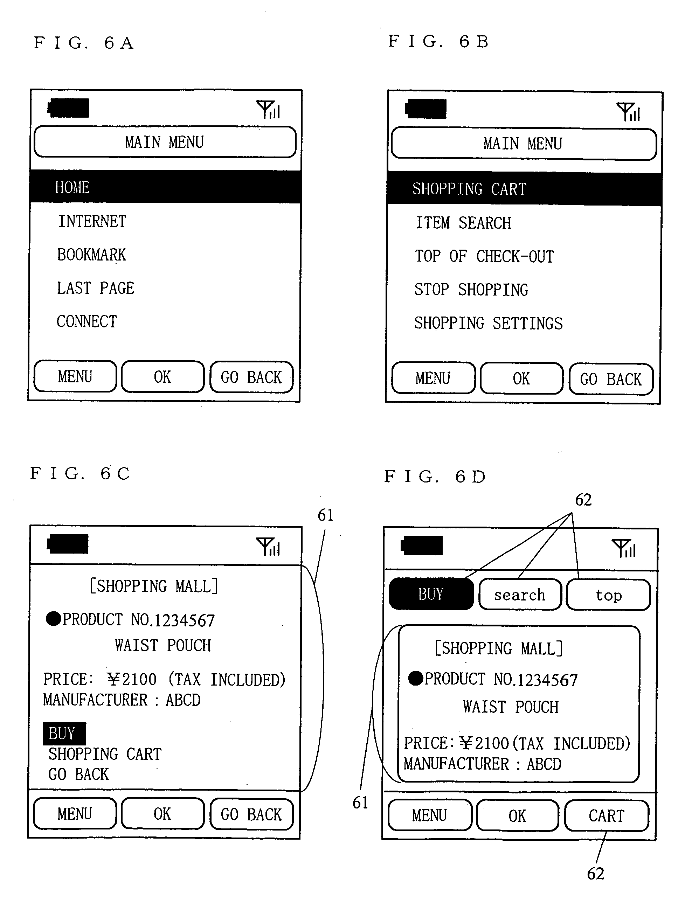

The content storage section 12 stores a media content to be displayed at the terminal device 3. The content is described in hypertext such as HTML. The program storage section 13 stores a UI (User Interface) operation program. As used herein, the UI operation program refers to a program describing user interface-related operations which are to be performed when a content is displayed at the terminal device 3. In other words, the UI operation program is a program which controls the user interface operations occurring at the terminal device 3. As such, the UI operation program functions to prompt a user to make an operation by displaying buttons (see FIGS. 6A to 6D) or generating audio outputs each representing an operation that can be made, and also functions to accept an operational input made by the user. Although the UI operation program may typically be written in Java(R), it may also be written in the C language or the C++ language. The content storage section 12 and the program storage section 13 are implemented as a storage device(s) comprised in the content server 1.

The content also contains program identification information of a UI operation program to be executed when the content is displayed. As used herein, the "program identification information" is information for identifying the UI operation program. In the present embodiment, the program identification information is link information which indicates a location in the content server 1 at which the UI operation program is stored. In other words, in a HTML document describing a content, a URL (Uniform Resource Locators) of a UI operation program corresponding to that content is indicated as link information.

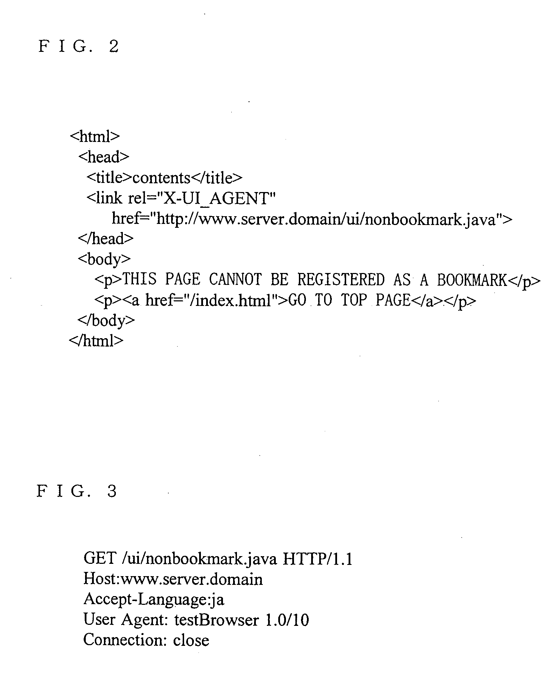

FIG. 2 is a diagram illustrating an exemplary description of a content according to the present embodiment. The content shown in FIG. 2 is described in the form of HTML. The link information is shown as a LINK element <link rel="X-UI_AGENT" href= "http://www.server.domain/ui/nonbookmark.java"> in the HTML document. The location at which the UI operation program is stored is indicated by the description "http://www.server.domain/ui/nonbookmark.java". Thus, the location of the UI operation program is indicated by a URL which is commonly used for identifying a location of a HTML document.

Referring back to FIG. 1, the server controlling section 11 receives a data (i.e., a content or a UI operation program) acquisition request from the terminal device 3. The server controlling section 11 transmits data which is in accordance with the received acquisition request to the terminal device 3. The functions of the server controlling section 11 are realized as a CPU in the content server 1 executes predetermined program operations.

The terminal device 3 transmits the aforementioned data acquisition request to the content server 1. The terminal device 3 also performs a process of receiving data which is in accordance with the acquisition request from the content server 1 and displaying the data on the screen of the terminal device, for example. The terminal device 3 is typically a mobile phone; alternatively, the terminal device 3 may be a personal computer, a PDA (personal digital assistant), a digital camera, or any like device which is capable of communicating with the content server 1. The terminal device 3 comprises a transmission/reception section 31, a data storage section 32, a terminal controlling section 33, a UI operation execution section 34, a display processing section 35, an output section 37, and an input section 36. Hereinafter, the component elements of the terminal device 3 will be specifically described.

The data storage section 32, which is implemented as a storage device comprised in the terminal device 3, e.g., a ROM or a RAM, stores the data which is transmitted from the content server 1. The data storage section 32 corresponds to a cache mechanism of a WWW browser, for example. The data to be stored in the data storage section 32 is a content 322 and a UI operation program 321. The data storage section 32 previously stores a default UI operation program corresponding to UI operations to be performed by default.

Next, the terminal controlling section 33, the UI operation execution section 34, and the display processing section 35 will be described. The functions of these component elements are realized as a CPU in the terminal device 3 executes predetermined programs. The general browser functions are realized by means of the terminal controlling section 33, the UI operation execution section 34, and the display processing section 35.

The terminal controlling section 33 performs a process of requesting to acquire data from the content server 1. For example, upon receiving from the UI operation execution section 34 a request to acquire data, the terminal controlling section 33 transmits a data acquisition request to the content server 1. A specific example of the data acquisition request is shown in FIG. 3. Moreover, the terminal controlling section 33 accepts the data which is transmitted from the content server 1. The acquired data is passed to the UI operation execution section 34 and the display processing section 35.

FIG. 3 is a diagram illustrating an exemplary data acquisition request which is transmitted from the terminal device 3 to the content server 1. The acquisition request shown in FIG. 3 includes a path name indicating a data location in the content server 1 and a host name indicating the name of the content server 1. In the example shown in FIG. 3, the path name is "/nonbookmark.java", and the host name is "www.server.domain".

The UI operation execution section 34 executes UI operations, i.e., operations which are described in the UI operation program. Thus, the functions of the UI operation execution section 34 are realized as the UI operation program stored in the data storage section 32 is executed. For example, in the case where the UI operation program is written in Java (R), the UI operation execution section 34 is a Java virtual machine which executes Java programs.

The display processing section 35 causes the content stored in the data storage section 32 to be displayed on a display device composing the output section 37. Specifically, the display processing section 35 analyzes the format of the HTML document (content), and generates display data for displaying the content on the display device composing the output section 37. The display data is image data for displaying an image on a display screen of the display device composing the output section 37. Moreover, in addition to the display data, the display processing section 35 may generate audio data for outputting audio to an audio output device composing the output section 37.

The output section 37 is primarily a display device such as a liquid crystal display device. The output section 37 displays the content which is transmitted from the content server 1. The output section 37 may also include an audio output device, such as a loudspeaker, so as to be able to output the display data and audio data generated by the display processing section 35 as images and audio.

The input section 36, which is an input device composed of keys, buttons, and or a microphone, for example, accepts an operational input made by a user. Specifically, upon detecting the pressing of a key by the user, for example, the input section 36 generates input information in accordance with the pressing of the key, and outputs the generated input information to the UI operation execution section 34.

The transmission/reception section 31, which is implemented by means of the communication software and wireless communication hardware composing the terminal device 3, receives an instruction from the terminal controlling section 33, and transmits a data acquisition request to the content server 1 via the base station 2. When data is received from the content server 1, the transmission/reception section 31 causes the received data to be stored to the data storage section 32.

Next, an operation of the content transmission system according to the present embodiment will be described. In the following description, it is assumed that a content represented by the content data which is stored in the data storage section 32 (referred to as "Content A" in the following description of the present embodiment) is being displayed by the output section 37. Under this assumption, a case will be described where the terminal device 3 makes a request to the content server 1 to acquire a new content (referred to as "Content B" in the following description of the present embodiment) therefrom. It is further assumed that the UI operation program stored in the data storage section 32 (referred to as "UI operation program A" in the following description of the present embodiment) is used when Content A is being displayed, whereas another UI operation program (referred to as "UI operation program B" in the following description of the present embodiment) is to be used when Content B is being displayed.

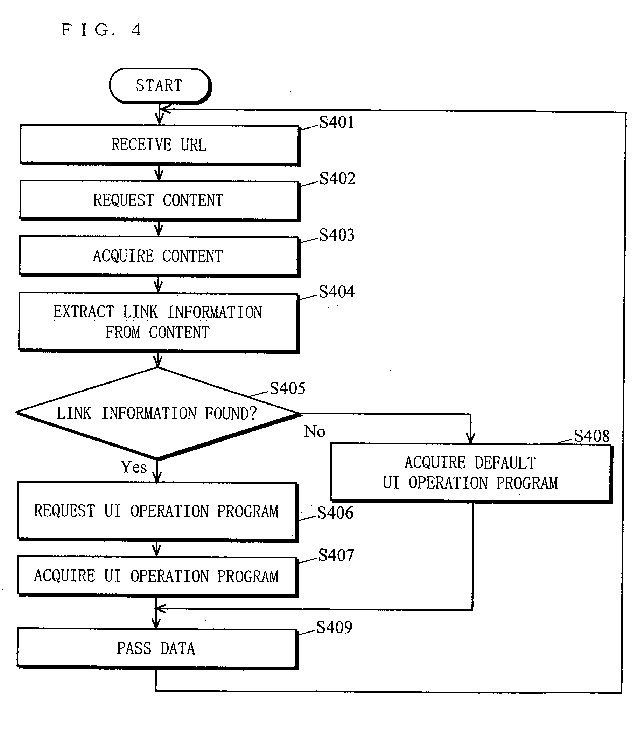

FIG. 4 is a flowchart illustrating an operation of the terminal controlling section 33 according to the first embodiment. At step S401, the terminal controlling section 33 receives a URL of Content B from the UI operation execution section 34. The UI operation execution section 34 passes the URL to the terminal controlling section 33 through the following process. When an operational input made by a user is inputted to the input section 36, the operational input is accepted by the UI operation execution section 34. It is assumed herein that this operational input instructs acquisition of Content B; that is, the operational input is the URL indicating the location of Content B. The inputting of the URL by the user may be done by, for example, selecting a bookmark, directly inputting the URL through a key or button operation, or selecting the URL as link information contained within the screen of the output section 37 (on which Content A is being displayed) . The acceptance of the operational input at this point is realized on the basis of UI operation program A. The UI operation execution section 34 passes the URL indicating the location of accepted Content B to the terminal controlling section 33.

At step S402, based on the URL received from the UI operation execution section 34, the terminal controlling section 33 makes a request to the content server 1 to acquire a content (i.e., Content B in this example) therefrom. Specifically, a data acquisition request for data concerning Content B is generated based on the URL received from the UI operation execution section 34. The acquisition request is transmitted to the content server 1 via the transmission/reception section 31. Hereinafter, the operation of the content server 1 will be described.

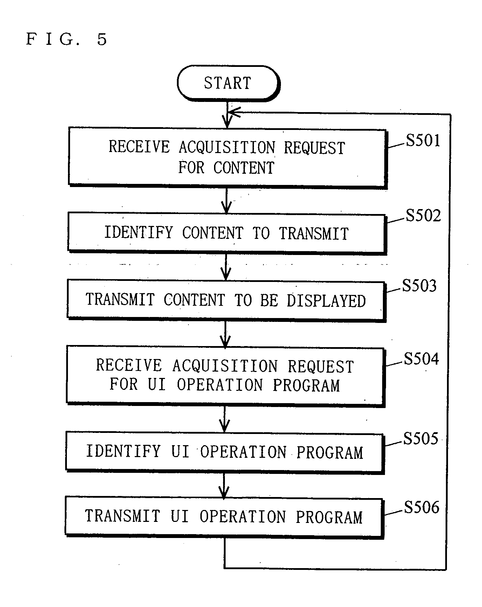

FIG. 5 is a flowchart illustrating an operation of the server controlling section 11 according to the first embodiment. At step S501, the server controlling section 11 receives from the terminal device 3 a data acquisition request for data concerning a content. At the following step S502, the data (content) to be transmitted is identified based on the received acquisition request. Specifically, the server controlling section 11 identifies the location of the data to be transmitted based on the path name contained in the acquisition request. Furthermore, at step S503, the server controlling section 11 transmits the requested content to the terminal device 3. Specifically, among the contents stored in the content storage section 12, a content which is stored at the location identified at step S502 is transmitted to the terminal device 3. In this example, Content B is transmitted.

Referring back to FIG. 4, at step S403, the terminal controlling section 33 acquires the content (i.e., Content B in this example) which has been transmitted from the content server 1. Specifically, Content B having been transmitted from the content server 1 is stored to the data storage section 32. Then, the terminal controlling section 33 reads Content B having been stored in the data storage section 32.

At step S404, the terminal controlling section 33 extracts link information from the acquired content. The link information indicates the location of a UI operation program. In this example, the acquired content, i.e., Content B, indicates the location of UI operation program B. Note that a content which does not require any particular UI operation program to be used does not need to contain link information. If no link information is contained in the content acquired at step S403, no link information is extracted at step S404. In this case, default UI operations are performed, as described later.

At step S405, the terminal controlling section 33 determines whether the content which has been acquired at step S403 (i.e., Content B in this example) contains link information or not. In other words, it is determined whether any link information is found in Content B having been transmitted from the content server 1 or not. If the result of the determination of step S405 is "YES", i.e., if any link information is found within the content, the terminal controlling section 33 performs the processes of S406 and step S407. On the other hand, if the result of the determination of step S405 is "NO", i.e., if no link information is found within the content, the terminal controlling section 33 performs the process of step S408.

At step S406, based on the link information contained within the content (i.e., Content B in this example), the terminal controlling section 33 makes a request to the content server 1 to acquire a UI operation program (i.e., UI operation program B in this example) therefrom. Specifically, a data acquisition request for data concerning UI operation program B, as identified by the URL contained in the link information, is generated, and the generated acquisition request is transmitted to the content server 1 via the transmission/reception section 31.

At step S504 in FIG. 5, the server controlling section 11 receives from the terminal device 3 the data acquisition request for data concerning UI operation program B. At the following step S505, the server controlling section 11 identifies the data for which the acquisition request has been made, based on the received acquisition request. Specifically, in a manner similar to step S502, the server controlling section 11 identifies the location of the data to be transmitted based on the path name contained in the acquisition request. Furthermore, at step S506, the server controlling section 11 transmits the UI operation program which has been identified at step S505 to the terminal device 3 (in this example, UI operation program B is transmitted) . Thus, at step S506, one of the UI operation programs stored in the program storage section 13 which is to be executed when displaying the relevant content (i.e., the content which has been transmitted at step S503) at the terminal device 3 is transmitted. After step S506, the server controlling section 11 returns to the process of step S501 to wait for another data acquisition request to be transmitted from the terminal device 3. Upon receiving another data acquisition request, the processes from steps S501 to S506 will be repeated.

Referring back to FIG. 4, at step S407, the terminal controlling section 33 acquires the UI operation program (UI operation program B) which has been transmitted from the content server 1. Specifically, as is the case with the content which is acquired at step S403, UI operation program B having been transmitted from the content server 1 is stored to the data storage section 32. The terminal controlling section 33 reads UI operation program B having been stored in the data storage section 32. After step S407, the terminal controlling section 33 performs the process of step S409.

On the other hand, at step S408, the terminal controlling section 33 acquires the default UI operation program. The default UI operation program, which is previously stored in the data storage section 32 of the terminal device 3, is read out by the terminal controlling section 33. After step S408, the terminal controlling section 33 performs the process of step S409.

At step S409, the terminal controlling section 33 causes the content which has been acquired at step S403 to be displayed, and determines the UI operation program. In other words, the terminal controlling section 33 passes Content B to the display processing section 35 so as to be displayed thereon, and passes UI operation program B (or the default UI operation program) to the UI operation execution section 34. As a result, the display processing section 35 generates display data based on received Content B to be displayed, and causes the display device composing the output section 37 to display the content. Moreover, the UI operation execution section 34 newly defines the subsequent UI operations in accordance with UI operation program B received from the terminal controlling section 33, instead of UI operation program A which has previously been defining the UI operations. If the result of the determination of step S405 is "YES", the UI operation program (i.e., UI operation program B) transmitted from the content server 1 is executed, and if the result of the determination of step S405 is "NO", the default UI operation program is executed.

Through steps S401 to S409 as described above, the process by the terminal device 3 of acquiring a new content from the content server 1 is completed. After step S409, the terminal controlling section 33 returns to the process of step S401 to wait for another URL to be inputted via a user instruction or the like. Upon receiving another URL, the processes from steps S401 to S409 will be repeated.

Next, specific examples of UI operations which can be performed in accordance with the operation of the content transmission system according to the present embodiment will be described. FIG. 6A, FIG. 6B, FIG. 6C, and FIG. 6D are diagrams illustrating exemplary images displayed by a display device composing an output section 37 according to the present embodiment. Note that FIG. 6A and FIG. 6B show exemplary images of menu screens displayed on a browser, whereas FIG. 6C and FIG. 6D show exemplary images of content screens displayed on a browser. Furthermore, FIG. 6A and FIG. 6C show exemplary displayed images in the case where the default UI operation program is used, whereas FIG. 6B and FIG. 6D are exemplary displayed images in the case where a UI operation program whose functions have been adapted to a shopping site is used.

On each of the menu screens shown in FIG. 6A and FIG. 6B, a plurality of commands are displayed. Each of the menu screens shown in FIG. 6A and FIG. 6B is controlled by the UI operation execution section 34 to be displayed by the display device composing the output section 37. On each menu screen, the user makes an operation as he or she selects one of the commands which are displayed. On the default menu screen, as shown in FIG. 6A, commands which are commonly used on a browser, e.g., "Home", "Internet", "Bookmark", "Last Page" and "Connection Settings" are displayed. When one of these commands is selected by the user, the UI operation execution section 34 passes to the terminal controlling section 33 a request to execute a predetermined function which is assigned to the selected command.

On the other hand, FIG. 6B shows a menu screen in the case where a UI operation program which is specialized for a certain shopping site is executed. On the menu screen shown in FIG. 6B, commands which are specialized for the shopping site are displayed, such as "Shopping Cart", "Item Search", "Top of Check-out", "Stop Shopping", and "Shopping Settings". When one of these commands is selected by the user, the UI operation execution section 34 passes to the terminal controlling section 33 a request to execute a predetermined function which is assigned to the selected command. As described above, in accordance with the above example, the commands to be displayed on a menu screen on a browser can be customized so as to be specialized for a particular shopping site. Therefore, it is made easier for the user to access functions which are frequently used at a shopping site and/or functions which are specialized for a shopping site.

Moreover, according to the present embodiment, UI functions on a content screen can be changed in accordance with the content. FIG. 6C shows a content screen in the case where the default UI operation program is executed. In FIG. 6C and FIG. 6D, a display region 61 is a portion which displays the actual content, as controlled by the display processing section 35. Any display region other than the display region 61 is a portion which displays buttons corresponding to commands defining UI operations, as controlled by the UI operation execution section 34. On the content screen shown in FIG. 6C, a content is displayed (in the display region 61), and buttons corresponding to commands which are commonly used on a browser, such as "Menu", "OK", and "Go Back", are displayed. When one of these buttons is selected by the user, the UI operation execution section 34 passes to the terminal controlling section 33 a request to execute a predetermined function which is assigned to the selected command.

FIG. 6D shows a content screen in the case where a UI operation program which is specialized for a certain shopping site is executed. On the content screen shown in FIG. 6D, buttons corresponding to commands which are specialized for the shopping site (buttons 62 shown in FIG. 6D), such as "Buy", "Search", and "Top", are displayed. Moreover, buttons corresponding to commands which are commonly used on a browser, such as "Menu" and "OK", are displayed on the screen, together with a "Cart" button (one of the buttons 62 shown in FIG. 6D), which is a command specialized for the shopping site. Thus, the buttons 62 correspond to commands to be displayed when a UI operation program which is specialized for the shopping site is executed. Note that the "Cart" button 62 is a result of changing the function of the button corresponding to the "Go Back" command in the default UI operation program. Thus, it is possible to change the function of a command which is defined by the default UI operation program, or display any additional command button. Furthermore, it is possible to limit the function of a command which is defined by the default UI operation program. For example, instead of the "Go Back" command button (FIG. 6C) which is defined by the default UI operation program, a button dedicated to another function "Cart" is displayed in FIG. 6D, which can mean that the function of the "Go Back" command is limited. Another way to limit a default function is by simply eliminating (i.e., not displaying) a button which is defined by default.

When one of these buttons is selected, the UI operation execution section 34 passes to the terminal controlling section 33 a request to execute a predetermined function which is assigned to the selected command. Thus, according to the above example, the buttons which are displayed on a command screen of a browser can be customized so as to be specialized for a shopping site. This makes it easier for a user to make operations necessary for utilizing the shopping site, than by using the default command screen.

The present embodiment illustrates UI operations based on a menu screen and a content screen as exemplary UI functions of a UI operation program; however the UI functions of a UI operation program are not limited thereto. Each UI function may be any function which involves interpreting an operation instruction made by a user and passing it to the terminal controlling section 33. For example, the UI operation program may assign functions to the input devices (keys, buttons, a touch panel, or the like) composing the input section 36. Alternatively, in the case where the terminal device is designed so as to accept an audio input, the UI operation program may additionally define a function of accepting the audio input, or restricting the audio input.

Thus, according to the present embodiment, UI operations based on a UI operation program which is adapted to each content can be realized. By repeating the process of acquiring a content and a UI operation program, a browser on the terminal device 3 (constituted by the terminal controlling section 33, the UI operation execution section 34, and the display processing section 35) is capable of changing the UI operations so as to be adapted to each content.

In the first embodiment, the process by the content server 1 of transmitting a content or a UI operation program is triggered by an acquisition request issued from the terminal device 3. This mode of data communications, where a user actively obtains necessary information, is referred to as "pull-type communications". On the other hand, there is another mode of communications called "push-type communications", where the content server 1 spontaneously transmits a content to the terminal device 3, e.g., an e-mail service or a short message service. In the case of push-type communications, the content server 1 transmits a spontaneously-designated content to a designated client (terminal) via the base station 2. Upon receiving the content, the transmission/reception section 31 stores the received content to the data storage section 32, and acquires a UI operation program which is adapted to the content, through a procedure similar to that described above (see steps S403 to S409). Thus, the content transmission system according to the present invention is not only applicable to a content delivery service based on pull-type communications but also to a content delivery service based on push-type communications.

In the first embodiment, in order for the terminal device 3 to acquire a UI operation program from the content server 1, it is necessary that the location of the UI operation program is indicated by link information within the corresponding content, and if link information is not found within the content, the terminal controlling section 33 acquires the default UI operation program from the data storage section 32 within the terminal device 3. In another embodiment, the default UI operation program may be acquired from the content server 1 from which the content is acquired.

For example, assume that the default UI operation program is stored at a location "/ui/default.java" within the content server 1, and that this information is previously stored in a ROM or the like within the terminal device 3. After receiving a content (e.g., at step S408 in FIG. 4), the terminal controlling section 33 transmits a request, directed to a path name "/ui/default.java", to the content server 1 which has transmitted that content, and obtains the UI operation program which is stored at this location. Thus, the default UI operation program can be stored at the content server 1. Furthermore, in the case where a plurality of content servers 1 exist, the URL of a default UI operation program corresponding to each content server 1 may be previously stored, thereby making it possible to define default UI operations for each content server 1.

The first embodiment illustrates the case where only one UI operation program is stored in the data storage section 32. In another embodiment, the data storage section 32 may be capable of storing a plurality of UI operation programs. In this case, the data storage section 32 may store additional UI operation programs without deleting any UI operation programs, until reaching a predefined maximum storable number. The maximum storable number may be defined in terms of the number of UI operation programs stored, a total data size thereof, or the like, for example. If any new UI operation program transmitted to the content server 1 results in the data storage section 32 exceeding the maximum storable number, a UI operation program which is selected based on a predetermined algorithm is deleted in order to accommodate the new UI operation program. The predetermined algorithm may be, for example, deleting a UI operation program which was stored longest ago, or deleting a UI operation program which has been least frequently accessed in the past.

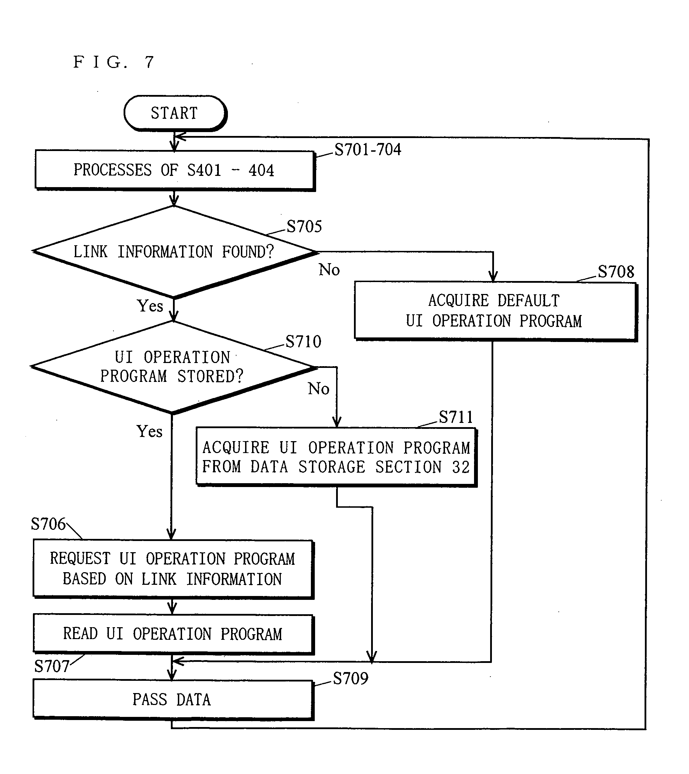

FIG. 7 is a flowchart illustrating another exemplary operation according to the first embodiment. The only differences between FIG. 7 and FIG. 4 are the processes of steps S710 and S711, while the other processes are identical to those described in FIG. 4. Therefore, the following description will mainly concern the processes of steps S710 and S711.

In FIG. 7, the processes from steps S701 to S705 are identical to the processes of steps S401 to 405 shown in FIG. 4. If the result of the determination of step S705 is "YES", the terminal controlling section 33 performs the process of step S710. At step S710, the terminal controlling section 33 determines whether the UI operation program which is identified by the link information extracted at step S704 is stored in the data storage section 32 or not. This determination can be facilitated by, for example, when storing the UI operation program which has been acquired from the content server 1, also storing, in association with the UI operation program, the link information for the acquired UI operation program. Then, step S710 may determine whether any link information which is identical to the link information extracted at step S704 is stored in the data storage section 32 or not, thereby determining whether a UI operation program to be executed is already stored in the data storage section 32 or not.

If step S710 finds that such a UI operation program is not stored in the data storage section 32, the terminal controlling section 33 performs the process of step S706. The processes from step S706 are identical to those in FIG. 4. On the other hand, if step S710 finds that such a UI operation program is stored in the data storage section 32, the terminal controlling section 33 performs the process of step S711. At step S711, the terminal controlling section 33 acquires a UI operation program from the data storage section 32. The UI operation program to be executed in this case is the UI operation program stored in the data storage section 32, which is identified by the link information that is contained in the content transmitted from the content server 1. The process of step S709, which is performed after step S711, is identical to that in FIG. 4, and the description thereof is omitted.

Thus, by applying a cache function similar to that used for contents also to UI operation programs, it becomes possible to avoid the trouble of acquiring the same UI operation program more than once. Moreover, a UI operation program can be acquired in a shorter period of time than in the case of acquiring the UI operation program from the content server 1.

### (second embodiment)

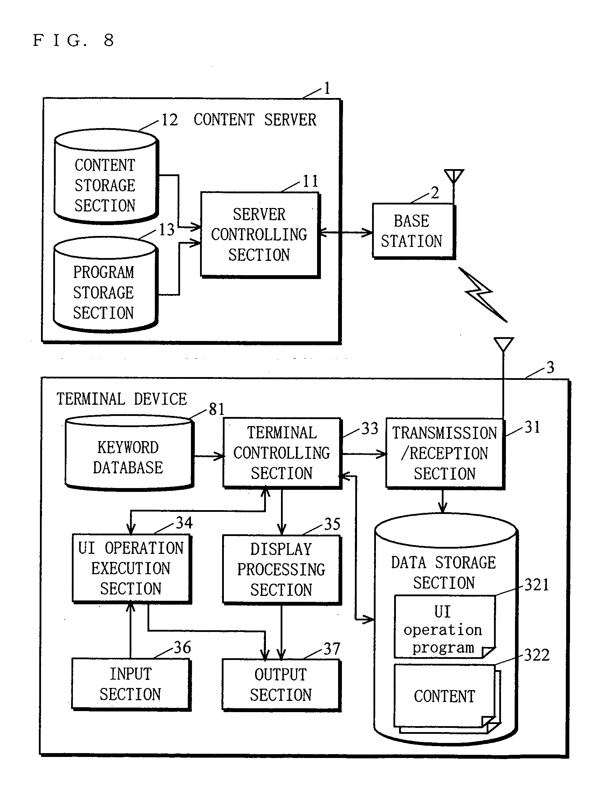

Next, a second embodiment according to the present invention will be described. In the first embodiment described above, a default UI operation program is used if link information is not found within the content. In the second embodiment, a specific UI operation program is acquired based on a keyword contained within a content if link information is not found within the content. Hereinafter, the present embodiment will be described with reference to FIG. 8 to FIG. 10.

FIG. 8 is a block diagram illustrating the structure of a content transmission system according to the second embodiment. In FIG. 8, the terminal device 3 comprises a data storage section 32, a terminal controlling section 33, a UI operation execution section 34, a display processing section 35, an output section 37, an input section 36, a transmission/reception section 31, and a keyword database 81. The content transmission system shown in FIG. 8 is identical to that shown in FIG. 1 except that the keyword database 81 is comprised in the terminal device 3. Those component elements shown in FIG. 8 which have their counterparts in FIG. 1 will be denoted by like numerals, and the descriptions thereof will be omitted.

The keyword database 81, which is composed of a storage device (e.g., a ROM) within the terminal device 3, stores a keyword table. The keyword table associates a keyword, which is related to each content, with program identification information of a UI operation program to be executed when the content is displayed at the terminal device 3. As used herein, a "keyword" is a character string contained in a content or a character string contained in the URL of a content. The present embodiment illustrates an example where the program identification information is link information, i.e., the URL of a UI operation program.

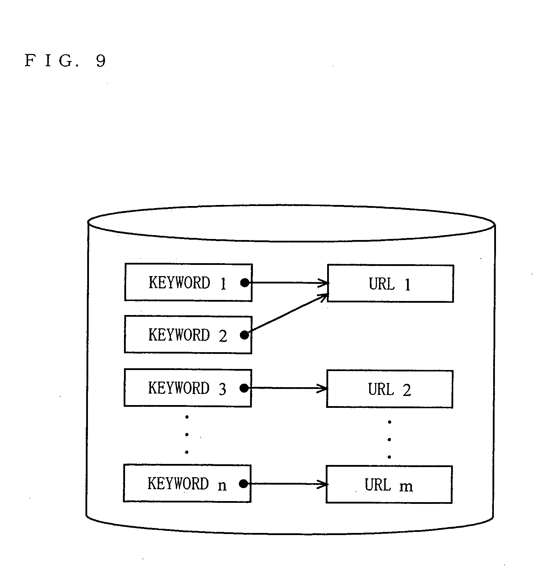

FIG. 9 is a schematic diagram illustrating the structure of a keyword table. In the example illustrated in FIG. 9, the keyword table stores n keywords (keywords 1 to n, where n is a natural number), and m URLs (URLs 1 to m, where m is a natural number) . The keywords are associated with the URLs in such a manner that every keyword has a uniquely corresponding URL associated therewith. As shown in FIG. 9, one URL may be associated with a number of keywords.

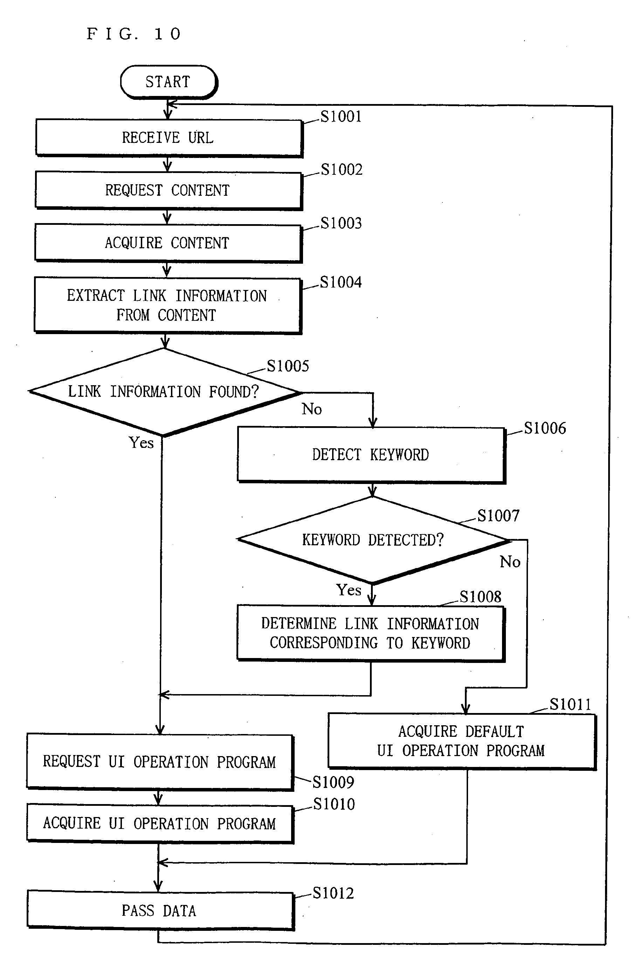

FIG. 10 is a flowchart illustrating a flow of processes performed by the terminal controlling section 33 according to the second embodiment. The processes from steps S1001 to 1004 are similar to the processes from steps S401 to 404 in FIG. 4. Note that the processes performed at the content server 1 according to the second embodiment are similar to their corresponding processes according to the first embodiment as illustrated in FIG. 5.

At step S1005, the terminal controlling section 33 determines whether a content which has been acquired at step S1003 contains any link information or not. This determination is similar to the determination made at step S205 according to the first embodiment. If the result of the determination of step S1005 indicates that the content contains link information, the terminal controlling section 33 performs the process of step S1009. The processes of steps S1009 and S1010 are similar to the processes of steps S406 and 407 according to the first embodiment. On the other hand, if the result of the determination of step S1005 indicates that the content does not contain any link information, the terminal controlling section 33 performs the process of step S1006.

At step S1006, the terminal controlling section 33 detects a keyword related to the content acquired at step S1003. More specifically, the process of step S1006 is as follows. The terminal controlling section 33 selects one of the keywords in the keyword table, and determines whether the selected keyword is contained within the content or not. If it is determined that the selected keyword is contained within the content, then the keyword has been "detected" as a keyword related to the content. This determination is consecutively made with respect to each next keyword in the keyword table. The terminal controlling section 33 repeats the determination process until determining that a selected keyword is contained in the content or until completing the determination with respect to all of the keywords (i.e., n keywords in the example shown in FIG. 9).

At step S1007, the terminal controlling section 33 determines whether a keyword has been detected in the detection process of step S1006 or not. In other words, at step S1007, it is determined whether a keyword stored in the keyword table is contained in the content or not. If no keyword is contained in the content, the terminal controlling section 33 performs the process of step S1011. The process of step S1011 is similar to step S408 according to the first embodiment as illustrated in FIG. 4, and the description thereof is omitted. On the other hand, if a keyword is found contained in the content, the terminal controlling section 33 performs the process of step S1008.

At step S1008, the terminal controlling section 33 determines the link information (URL) which corresponds to the keyword which has been detected in the detection process of step S1006. The determination of link information is made by referring to the keyword table which is stored in the keyword database 81. Thus, through the processes of steps S1006 to S808 as described above, the UI operation program to be executed is determined. After step S1008, the terminal controlling section 33 performs the processes of step S1009 to S1012. The processes of steps S1009 to S1012 are similar to the processes of steps S406 to S409 according to the first embodiment as illustrated in FIG. 4, and the description thereof is omitted.

Thus, even if no link information indicating the location of a UI operation program is contained in the content, a UI operation program corresponding to the content can be acquired from the content server 1.

In the second embodiment, the keyword database 81 is implemented as a ROM within the terminal device 3, and the keyword table is internalized, fixed data. In another embodiment, the keyword database 81 may be implemented as a RAM, and the keyword table may be changeable in accordance with a user operation. As a result, the user becomes capable of adding, deleting, and/or changing the correspondence between keywords and program identification information.

The keyword table may be previously stored in a ROM or a RAM within the terminal device 3, or acquired from the content server 1. The timing for acquiring the keyword table may be arbitrary; for example, the keyword table may be acquired at the time of acquiring a content from the content server 1. Hereinafter, a process of acquiring the keyword table at the time of acquiring a content from the content server 1 will be described.

After acquiring a content from the content server 1 (e.g., after step S1003 in FIG. 10), the terminal controlling section 33 makes a request to the content server 1 via the transmission/reception section 31 to acquire a keyword table therefrom. For example, the terminal controlling section 33 requests the content server 1 for a keyword table indicated by a path name "/ui/keyword.rule". The acquisition request for a keyword table may be made in the same format as an acquisition request for a content. This location information is previously stored in a ROM within the terminal device 3.

In response to an acquisition request for a keyword table from the terminal device 3, the content server 1 transmits the keyword table to the terminal device 3. The keyword table which has been transmitted from the content server 1 is stored in the data storage section 32. The terminal controlling section 33 searches for a keyword within the content by referring to the keyword table stored in the data storage section 32. The subsequent procedure may be the same as that of the above-described second embodiment (i.e., the procedure from step S1008 in FIG. 10).

Thus, in the case where the content does not contain any program identification information, a keyword table may be acquired from the content server 1. In the case where a plurality of content servers exist, a keyword table may be previously stored for each content server, whereby it becomes possible to use a different keyword table for each content server.

### (third embodiment)

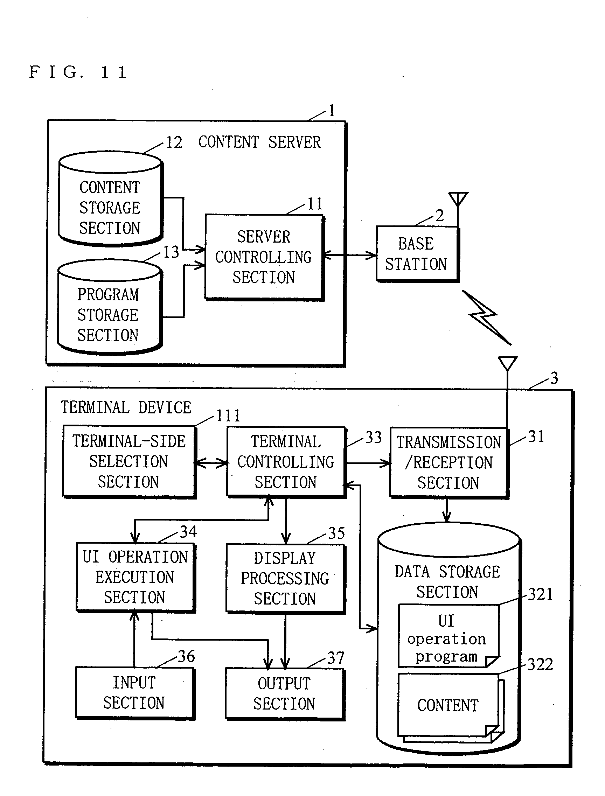

Next, a third embodiment of the present invention will be described. The first embodiment illustrates an example where one unit of program identification information is contained in a content. In the third embodiment, a plurality of units of program identification information are contained in a content, and one of the plurality of units of program identification information is selected based on a predetermined condition. Hereinafter, the present embodiment will be described with reference to FIG. 11 to FIG. 14.

FIG. 11 is a block diagram illustrating the structure of a content transmission system according to the third embodiment of the present invention. In FIG. 11, the terminal device 3 comprises a data storage section 32, a terminal controlling section 33, a UI operation execution section 34, a display processing section 35, an output section 37, an input section 36, a transmission/reception section 31, and a terminal-side selection section 111. The content transmission system shown in FIG. 11 is identical to that shown in FIG. 1 except that the terminal-side selection section 111 is comprised in the terminal device 3. Those component elements shown in FIG. 11 which have their counterparts in FIG. 1 will be denoted by like numerals, and the descriptions thereof will be omitted.

Based on a predetermined condition, the terminal-side selection section 111 selects one of a plurality of units of program identification information contained in the content transmitted from the content server 1. Specifically, if a plurality of units of program identification information are contained in the content which has been received from the terminal controlling section 33, an appropriate one of the units of program identification information is selected, and returned to the terminal controlling section 33. In the present embodiment, it is assumed that the above-described link information is used as program identification information.

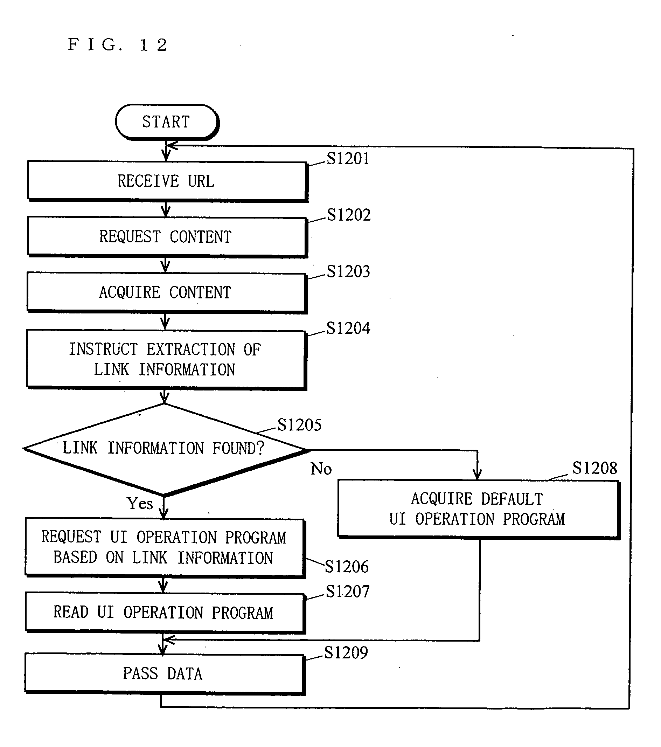

FIG. 12 is a flowchart illustrating an operation of the terminal controlling section 33 according to the third embodiment. In FIG. 12, the processes of steps S1201 to 1203 are similar to the processes of steps S401 to 403 in FIG. 4. Note that the processes performed at the content server 1 according to the second embodiment are similar to their corresponding processes according to the first embodiment as illustrated in FIG. 5.

At step S1204, the terminal controlling section 33 instructs the terminal-side selection section 111 to extract link information. Specifically, a content which is acquired at step S1203 is passed to the terminal-side selection section 111. In response, the terminal-side selection section 111 extracts link information from the content received from the terminal controlling section 33. If there is a plurality of units of link information, one of the units of link information is selected and returned to the terminal controlling section 33. Based on the returned link information, the terminal controlling section 33 makes a request to acquire a UI operation program. Hereinafter, a specific example of the process of selecting link information performed by the terminal-side selection section 111 will be described.

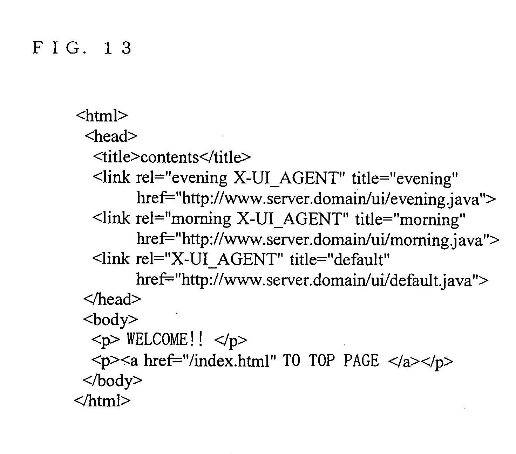

FIG. 13 is a diagram illustrating an exemplary description of a content (HTML document) containing a plurality of units of link information. In the illustrated example, three units of link information are contained:
<link rel = "evening X-UI_AGENT" title = "evening" href="http://www.server.domain/ui/evening.java">,
<link rel = "morning X-UI_AGENT" title = "morning" href="http://www.server.domain/ui/morning.java">, and
<link rel = "X-UI_AGENT" title = "default" href="http://www.server.domain/ui/default.java">.

In this particular example, the terminal-side selection section 111 extracts the above three units of link information which are contained in the content received from the terminal controlling section 33. Furthermore, one of the extracted units of link information is determined based on a predetermined condition.

In FIG. 13, each unit of link information contains information indicating a condition under which that link information will be extracted. In the present embodiment, this information is indicated as a REL attribute of a LINK element. For example, the link information <link rel = "evening X-UI_AGENT" title = "evening" href = "http://www.server.domain/ui/evening.java"> shown in FIG. 13 contains the description "evening X-UI_AGENT" as the REL attribute. This description indicates that the above unit of link information is to be selected when an internal clock of the terminal device 3 points to anywhere between 17 o'clock and 20 o'clock (it is assumed herein that the link information is determined based on the current time of the internal clock of the terminal device 3). Therefore, if the internal clock of the terminal device 3 points to 18 o'clock, for example, a UI operation program whose URL is "http://www.server.domain/ui/evening.java" will be acquired.

When the internal clock of the terminal device 3 points to anywhere between 6 o'clock and 9 o'clock, the terminal-side selection section 111 selects a unit of link information whose REL attribute is "morning X-UI_AGENT". In this case, the URL of the UI operation program to be acquired is "http://www.server.domain/ui/morning.java". When the internal clock of the terminal device 3 points to any other time, the terminal-side selection section 111 selects a unit of link information whose REL attribute is "X-UI_AGENT". In this case, the URL of the UI operation program to be acquired is "http://www.server.domain/ui/default.java". Thus, on the basis of the REL attribute of the LINK element, the terminal-side selection section 111 determines the link information of the UI operation program to be acquired.

Alternatively, the selection may be made based on the type (mobile phone, personal computer, PDA, etc.), manufacturer, product name, serial number, or the like of the terminal device 3, instead of a time indicated by the internal clock of the terminal device 3. Furthermore, the terminal-side selection section 111 may comprise a user interface for accepting a user input to enable switching of the link information to be selected.

In FIG. 12, the processes of the subsequent steps S1205 to S1209 are similar to the processes of steps S405 to S409 in FIG. 4.

Next, a variant of the third embodiment will be described. While the above-described third embodiment illustrates an example where the terminal device 3 comprises the terminal-side selection section 111, the content server 1 may comprise a server-side selection section 141 instead. Hereinafter, an operation in the case where the content server 1 comprises the server-side selection section 141 will be described.

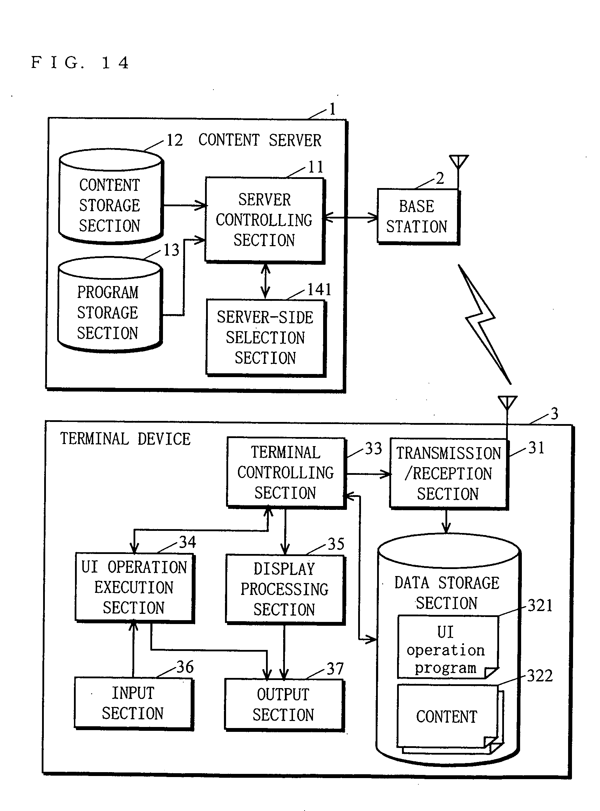

FIG. 14 is a block diagram illustrating the structure of a content transmission system according to a variant of the third embodiment. In FIG. 14, the content server 1 comprises a server controlling section 11, a content storage section 12, a program storage section 13, and a server-side selection section 141. The content transmission system shown in FIG. 14 is identical to that shown in FIG. 1 except that the content server 1 comprises the server-side selection section 141. Those component elements shown in FIG. 14 which have their counterparts in FIG. 1 will be denoted by like numerals, and the descriptions thereof will be omitted.

Based on a predetermined condition, the server-side selection section 141 selects one of a plurality of units of program identification information contained in a content stored in the content storage section 12. Specifically, if a plurality of units of program identification information are contained in the content which has been received from the server controlling section 11, the server-side selection section 141 selects an appropriate one of the units of program identification information and returns it to the server controlling section 11. Moreover, the server-side selection section 141 deletes any program identification information other than the selected unit of program identification information from the content. It is assumed herein that the above-described link information is used as program identification information.

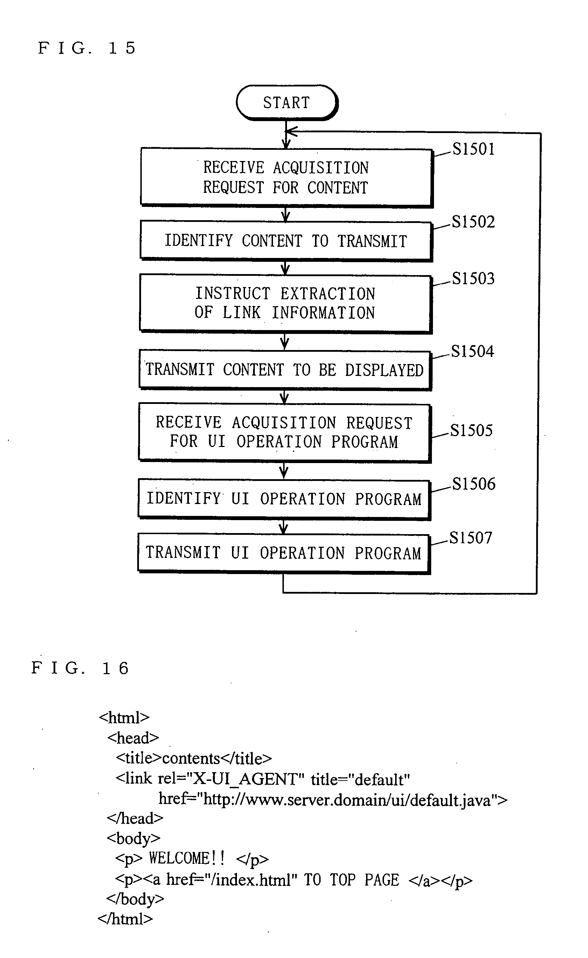

FIG. 15 is a flowchart illustrating an operation of the content server 1 according to the present variant of the third embodiment. The operation of the terminal controlling section 33 is similar to that according to the first embodiment as illustrated in FIG. 4. In FIG. 15, the processes of steps S1501 and S1502 are similar to the processes of steps S501 and S502 shown in FIG. 5. At step S1503, the server controlling section 11 instructs the server-side selection section 141 to extract link information. Specifically, a content which is identified at step S1502 is passed to the server-side selection section 141. In response, the server-side selection section 141 extracts link information from the content received from the server controlling section 11. If there is a plurality of units of link information, one of the units of link information is selected and returned to the terminal controlling section 33. The process of selecting link information performed by the server-side selection section 141 is similar to the process performed by the terminal-side selection section 111 in the terminal device 3 according to the third embodiment. Depending on the result of the above determination process, the server-side selection section 141 updates the content by deleting the unselected units of link information from the content. The terminal-side selection section 111 returns the updated content to the server controlling section 11.

FIG. 16 is a diagram illustrating an exemplary content which is returned from the server-side selection section 141 to the server controlling section 11 shown in FIG. 14. For example, in the case where the content illustrated in FIG. 11 is passed from the server controlling section 11 to the server-side selection section 141, if the current time of the internal clock of the server controlling section 11 is neither between 6 o'clock and 9 o'clock nor between 17 o'clock and 20 o'clock, the link information to be selected is determined to be <link rel = "X-UI_AGENT" title = "default" href = "http://www.server.domain/ui/default.java">. As a result, any other link information is deleted by the server-side selection section 141, and the resultant content after the deletion is returned to the server controlling section 11.

At step S1504, the content server 1 transmits the content which has been returned from the server-side selection section 141 at step S1503 to the terminal device 3. The processes of the subsequent steps S1505 to S1507 are similar to the processes of steps S504 and S506 shown in FIG. 5. Thus, even in the case where the terminal device 3 does not comprise the terminal-side selection section 111, it is possible to select one of a plurality of units of link information at the content server 1.

Alternatively, the server-side selection section 141 may select the link information based on User-Agent, Accept-Language, a supporting protocol, or the like contained in the request from the terminal device 3, instead of a time indicated by the internal clock of the server.

### (fourth embodiment)

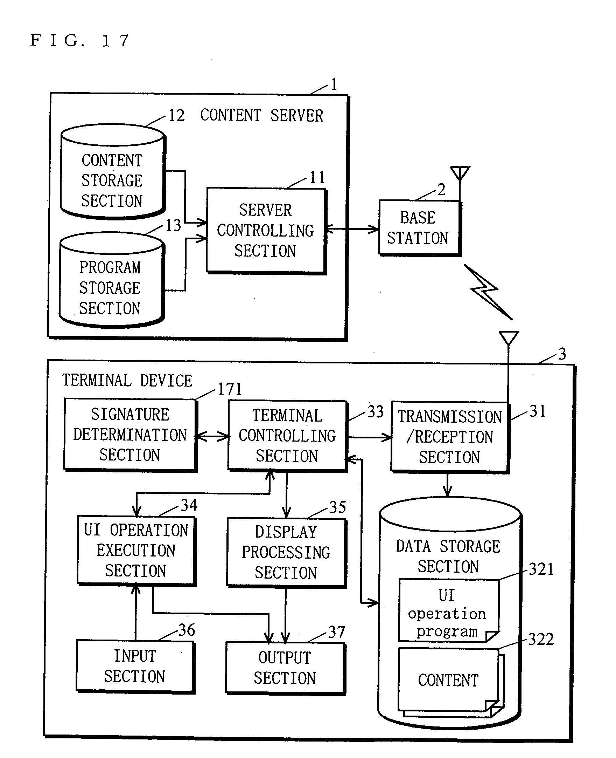

Next, a fourth embodiment of the present invention will be described. The fourth embodiment is based on the content transmission system according to the first embodiment plus a security authentication function. Hereinafter, the present embodiment will be described with reference to FIG. 17 to FIG. 19.

FIG. 17 is a block diagram illustrating the structure of a content transmission system according to the fourth embodiment of the present invention. In FIG. 17, the terminal device 3 comprises a data storage section 32, a terminal controlling section 33, a UI operation execution section 34, a display processing section 35, an output section 37, an input section 36, a transmission/reception section 31, and a signature determination section 171. The content transmission system shown in FIG. 17 is identical to that shown in FIG. 1 except that the terminal device 3 comprises the signature determination section 171. Those component elements shown in FIG. 17 which have their counterparts in FIG. 1 will be denoted by like numerals, and the descriptions thereof will be omitted.

The signature determination section 171 determines whether a signature is attached to the UI operation program transmitted from the content server 1 or not. According to the present embodiment, the signature determination section 171 also determines whether or not a signature is attached to the content transmitted from the content server 1. In the present embodiment, it is assumed that a byte string representing a digital signature is attached to any data (a content and a UI operation program) transmitted from the legitimate content server 1. Specifically, the signature determination section 171 verifies the digital signature which is attached to the content sent from the terminal controlling section 33, to determine whether the received content is authorized or not.

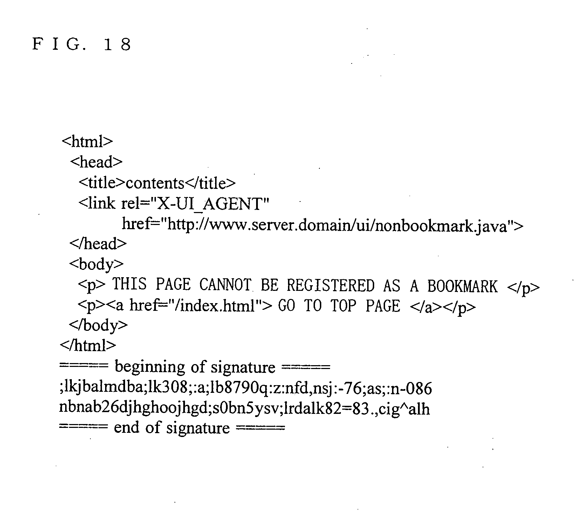

FIG. 18 is a diagram illustrating an exemplary content which is returned from the content server 1 according to the fourth embodiment. As shown in FIG. 18, a digital signature in HTML format is attached to the end of the content (HTML document).

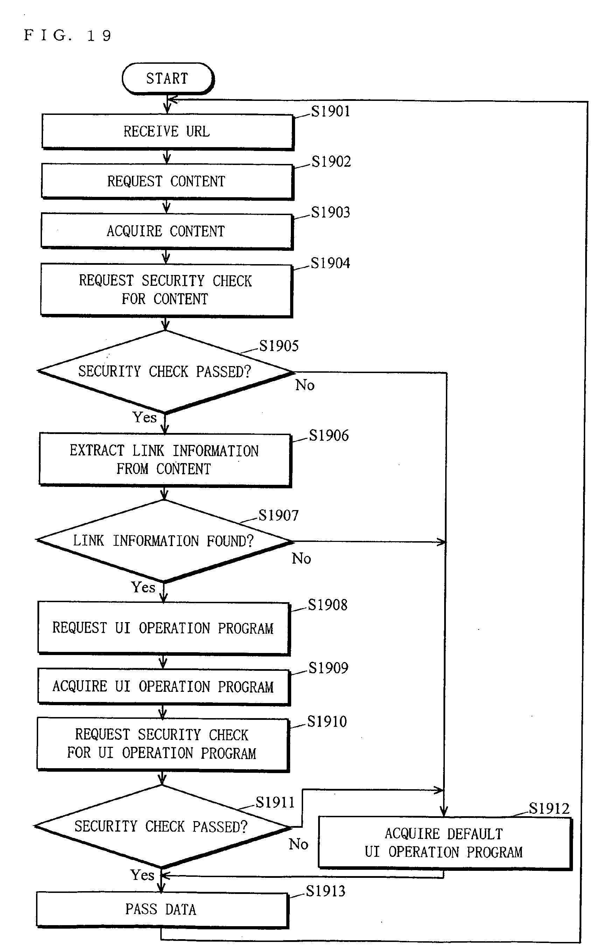

FIG. 19 is a flowchart illustrating an operation of the terminal controlling section 33 according to the fourth embodiment. In FIG. 19, the processes of steps S1901 to 1903 are similar to the processes of steps S401 to 403 shown in FIG. 4. Note that the processes performed at the content server 1 according to the fourth embodiment are similar to their corresponding processes according to the first embodiment as illustrated in FIG. 5. At step S1904, the terminal controlling section 33 instructs the signature determination section 171 to perform a security check for the content. In the present embodiment, the terminal controlling section 33 passes the content acquired from the content server 1 to the signature determination section 171, and instructs the signature determination section 171 to verify the digital signature (if any) therein. In response, the signature determination section 171 determines whether the content server 1 from which the content has been transmitted is a legitimate server or not, based on the digital signature (if any) in the received content. Furthermore, the signature determination section 171 returns the result of the determination to the terminal controlling section 33.

At step S1905, the terminal controlling section 33 receives the result of the security check from the signature determination section 171 to determine whether the content has successfully passed the security check or not. The determination as to whether the security check has been successfully passed or not is made based on whether the signature determination section 171 has successfully verified the digital signature or not. If the result of the determination of step S2105 is "NO", i.e., if the digital signature verification failed, the terminal controlling section 33 performs the process of step S1912. On the other hand, if the result of the determination of step S1905 is "YES", i.e., if the result of the digital signature verification is successful, the terminal controlling section 33 proceeds to step S1906 to extract link information from the verified content. The processes from steps S1906 to 1909 are similar to the processes from steps S404 to 407 shown in FIG. 4.

At step S1910, the terminal controlling section 33 passes the UI operation program acquired at step S1909 to the signature determination section 171, and instructs the signature determination section 171 to verify the digital signature therein. At the following step S1911, the terminal controlling section 33 determines whether the UI operation program has successfully passed the security check or not. If the result of the determination of step S1911 is "NO", i.e., if the digital signature verification has failed, the terminal controlling section 33 performs the process of step S1912. On the other hand, if the result of the determination of step S2105 is "YES", i.e., if the result of the digital signature verification is successful, the terminal controlling section 33 performs the process of step S1913.

At step S1912, the terminal controlling section 33 acquires a default UI operation program. Finally, at step S1913, the terminal controlling section 33 causes the content acquired at step S1903 to be displayed, and determines the UI operation program to be executed. The UI operation program to be passed to the UI operation execution section 34 is the UI operation program which has been acquired at step S1909 or S1912. Thus, the security checks for the UI operation program and the content can be performed at the terminal device 3.

### (fifth embodiment)

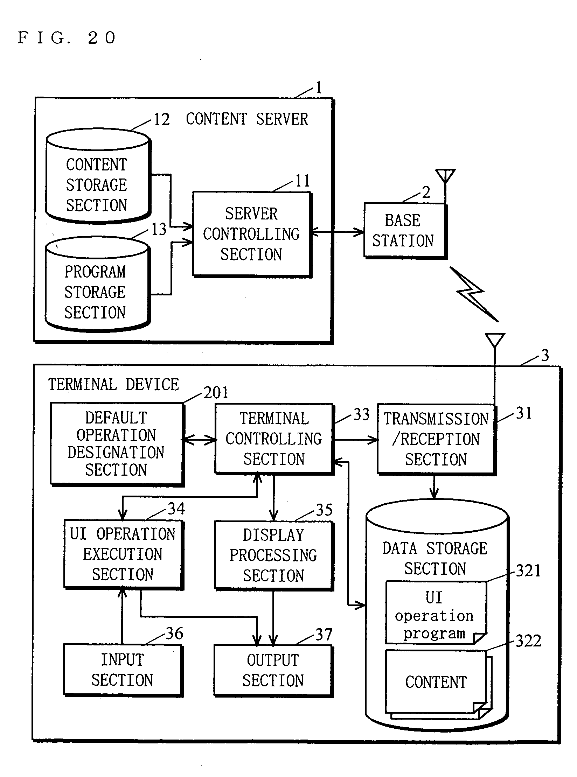

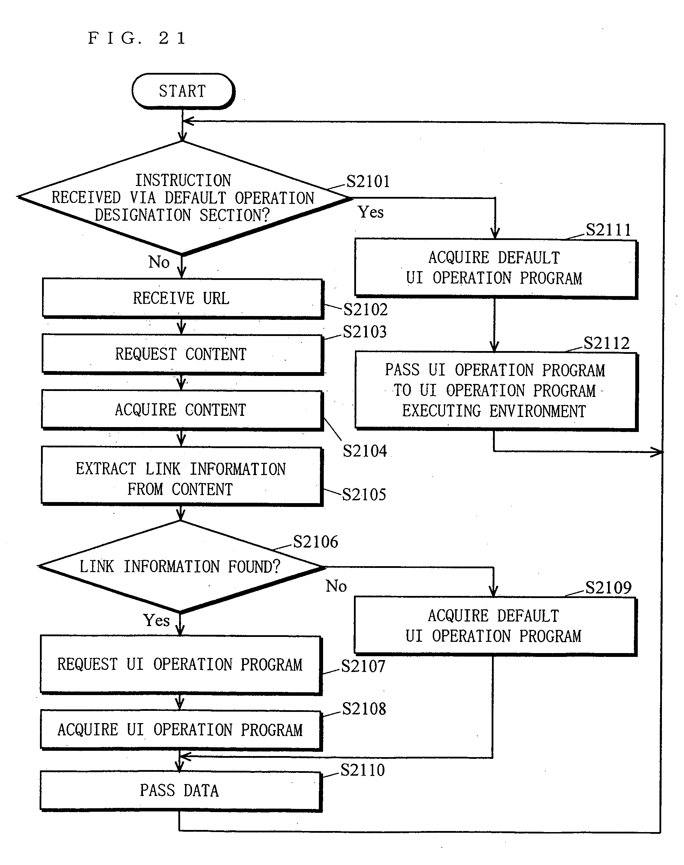

Next, a fifth embodiment of the present invention will be described. The fifth embodiment makes it possible for a user to instruct the content transmission system to use a default UI operation program. Hereinafter, the present embodiment will be described with reference to FIG. 20 and FIG. 21.

FIG. 20 is a block diagram illustrating the structure of a content transmission system according to the fifth embodiment of the present invention. In FIG. 20, the terminal device 3 comprises a data storage section 32, a terminal controlling section 33, a UI operation execution section 34, a display processing section 35, an output section 37, an input section 36, a transmission/reception section 31, and a default operation designation section 201. The content transmission system shown in FIG. 20 is identical to that shown in FIG. 1 except that the terminal device 3 comprises the default operation designation section 201. Those component elements shown in FIG. 20 which have their counterparts in FIG. 1 will be denoted by like numerals, and the descriptions thereof will be omitted.

The default operation designation section 201, which is composed of an input device for accepting an operational input made by a user, converts a user input to input information and outputs the input information to the terminal controlling section 33. The default operation designation section 201 may be the same device as that composing the input section 36; for example, the default operation designation section 201 may be a specific button which is provided in the input section 36.

FIG. 21 is a flowchart illustrating a general operation of the content transmission system shown in FIG. 20. At step S2101, the terminal controlling section 33 determines whether an instruction has been received via the default operation designation section 201 or not. If the result of the determination of step S2101 is "YES", the terminal controlling section 33 performs the process of step S2102. The processes from steps S2102 to 2110 are similar to the processes of steps S401 to S409 shown in FIG. 4. On the other hand, if the result of the determination of step S2101 is "NO", the terminal controlling section 33 performs the process of step S2111. At step S2111, a default UI operation program is acquired. The default UI operation program, which is previously stored in a ROM within the terminal device 3, is read out by the terminal controlling section 33. At the following step S2112, the terminal controlling section 33 passes the default UI operation program acquired at step S2111 to the UI operation execution section 34.

Thus, according to the fifth embodiment, a user can issue an instruction for the content transmission system to compulsorily use the default UI operation program. For example, when deciding that the UI operation program identified by the link information contained in the content is not suitable, or that the user does not like a UI operation environment provided by the UI operation program, the user can cause the default UI operation program to be executed.

### (sixth embodiment)

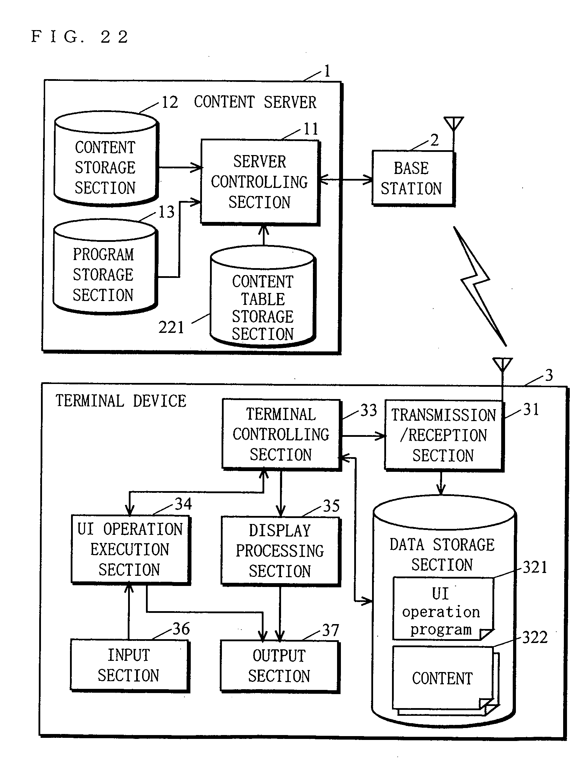

Next, a sixth embodiment of the present invention will be described. In the first to fifth embodiments described above, a content containing program identification information is transmitted to the terminal device 3 before a UI operation program is transmitted. On the other hand, according to the sixth embodiment, a content and a UI operation program are simultaneously transmitted. Hereinafter, the present embodiment will be described with reference to FIGS. 22 to 25.

FIG. 22 is a block diagram illustrating the structure of a content transmission system according to the sixth embodiment of the present invention. In FIG. 22, the content server 1 comprises a server controlling section 11, a content storage section 12, a program storage section 13, and a content table storage section 221. The content transmission system shown in FIG. 22 is identical to that shown in FIG. 1 except that the content server 1 comprises the content table storage section 221. Those component elements shown in FIG. 22 which have their counterparts in FIG. 1 will be denoted by like numerals, and the descriptions thereof will be omitted.

The content table storage section 221, which is composed of a storage device such as a ROM within the content server 1, stores a content table. As used herein, a "content table" is a table which shows correspondence between each content stored in the content storage section 12 and a UI operation program to be executed when that content is displayed at the terminal device 3.

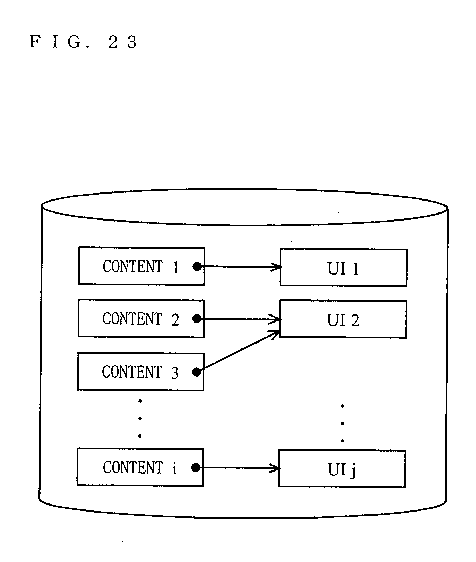

FIG. 23 is a schematic diagram illustrating the structure of a content table according to the sixth embodiment. As shown in FIG. 23, the content table stores contents and UI operation programs (e.g., "UI1", "UI2", and "UIj") in association with one another. In the example illustrated in FIG. 23, the content table stores i contents (contents 1 to i, where i is a natural number) and j UI operation programs (UI operation programs 1 to j, where j is a natural number). The contents are associated with the UI operation programs in such a manner that every content has a uniquely corresponding UI operation program associated therewith. As shown in FIG. 23, one UI operation program may be associated with a number of contents.

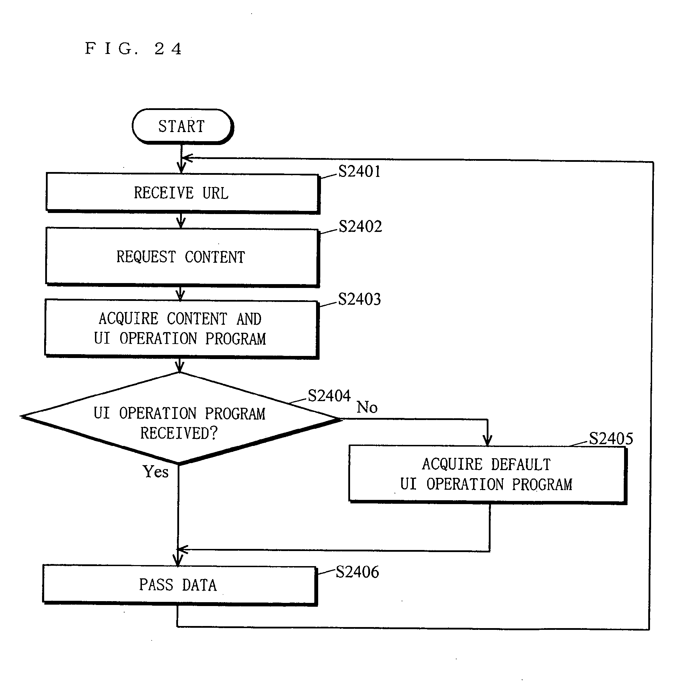

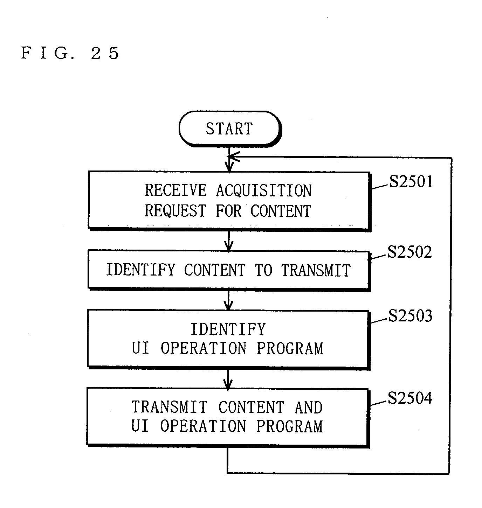

Next, an operation of the content transmission system of the sixth embodiment will be described. FIG. 24 is a flowchart illustrating a flow of processes performed by the terminal controlling section 33 according to the sixth embodiment. FIG. 25 is a flowchart illustrating a flow of processes performed by the server controlling section 11 according to the sixth embodiment.

In FIG. 24, the processes of steps S2401 and S2042 are similar to the processes of steps S401 and S402 shown in FIG. 4. In other words, a data acquisition request for acquiring data concerning a content is transmitted from the terminal device 3 to the content server 1. In response, the server controlling section 11 performs the process of step S2501 shown in FIG. 25. The process of step S2501 is similar to the process of step S501 shown in FIG. 5. The process of step S2502 is similar to the process of step S502 shown in FIG. 5.

At step S2503, the server controlling section 11 identifies a UI operation program to be transmitted to the terminal device 3. The aforementioned content table is referred to during this UI operation program determination process. Specifically, the server controlling section 11 identifies a UI operation program corresponding to the content which has been identified at step S2502 by referring to the content table. If no UI operation program is associated with a given content in the content table, no UI operation program needs to be identified at step S2503.

At step S2504, the server controlling section 11 transmits the content identified at step S2502 and the UI operation program identified at step S2503 to the terminal device 3. If no UI operation program has been identified at step S2503, the server controlling section 11 only transmits the content. After step S2504, the server controlling section 11 returns to step S2501 to wait for another data acquisition request from the terminal device 3.

Referring back to FIG. 24, at step S2403, the terminal controlling section 33 acquires the content and the UI operation program which have been transmitted to the terminal device 3 at step S2504 shown in FIG. 25. Specifically, the content and the UI operation program which have been transmitted from the content server 1 are stored to the data storage section 32. The terminal controlling section 33 reads the content and the UI operation program stored in the data storage section 32. If no UI operation program has been transmitted, only the content is stored in the data storage section 32, and the terminal controlling section 33 only reads out the content.

At step S2404, the terminal controlling section 33 determines whether a UI operation program has been received from the content server 1 or not, in other words, whether the content transmitted from the content server 1 is accompanied by a UI operation program or not. This determination is made based on whether the terminal controlling section 33 has read a UI operation program at step S2403 or not. If step S2404 finds that no UI operation program has been received from the content server 1, the terminal controlling section 33 performs the process of step S2405. At step S2045, a default UI operation program is acquired by the terminal controlling section 33. The default UI operation program is previously stored in the data storage section 32 of the terminal device 3. On the other hand, if step S2404 finds that a UI operation program has been received at the content server 1, the terminal controlling section 33 performs the process of step S2406. The process of step S2406 is similar to the process of step S409 shown in FIG. 4.

Thus, according to the sixth embodiment, a UI operation program can be transmitted together with a content. If the content is accompanied by no UI operation program, the default UI operation program can be used. By thus transmitting a UI operation program so as to accompany a content, the UI operation program can be acquired earlier than in the first to fifth embodiments.

In accordance with the content transmission system according to any of the above embodiments, the content server 1 transmits a content as well as a UI operation program which is in accordance with the content. As a result, the terminal device 3 can execute UI operations which are adapted to the received content. Thus, in the content transmission system according to the first to sixth embodiments, UI operations which are adapted to each content transmitted to the terminal device 3 can be realized.

The first to sixth embodiments illustrate the case where the data storage section 32 is implemented in an internal memory within the terminal device 3. In other embodiments, the data storage section 32 may be implemented in an external memory which is detachable to the terminal device 3. Such an external memory may be an SD (Secure Digital) card, for example. In this case, the terminal device 3 needs to comprise an external memory controlling section, which would be an external memory input/output data bus for controlling data input/output between the terminal controlling section 33 and the external memory. By comprising such an external memory controlling section, the terminal device 3 can permit the external memory to function as the data storage section 32.

In general, an external memory is capable of containing more data than an internal memory within the terminal device 3. Therefore, by employing an external memory instead of an internal memory, it becomes possible to store larger-sized contents and UI operation programs. In the case where a default UI operation program is to be stored in an external memory, it becomes possible to change the default UI operations of a browser by inserting external memories storing different UI operation programs.

The keyword database 81 according to the second embodiment may also be implemented in an external memory which is detachable to the terminal device 3, as is the case with the data storage section 32. As a result, it becomes possible to change the contents of the keyword database 81 by inserting different external memories.

The first to sixth embodiments illustrate the case where the content server 1 stores contents and UI operation programs. In other embodiments, the contents and the UI operation programs do not need to be stored within the same server. For example, a server for storing contents may be provided separately from a server for storing UI operation programs. Furthermore, a plurality of servers for storing contents may be provided, and/or a plurality of servers for storing UI operation programs may be provided. In other words, the contents and the UI operation programs may be stored in a server system composed of a plurality of servers . In this case, the server (s) for storing the programs will be provided with the functions of the program storage section 13 and a program transmission section (e.g., a CPU of the server (s) performing the processes from steps S501 to step S503 shown in FIG. 5); and the server(s) for storing the contents will be provided with the functions of the content storage section 12 and a content transmission section (e.g., a CPU of the server(s) performing the processes from steps S504 to step S506 shown in FIG. 5).

While the invention has been described in detail, the foregoing description is in all aspects illustrative and not restrictive. It is understood that numerous other modifications and variations can be devised without departing from the scope of the invention.

## Claims

1. A content transmission system comprising a server system (1) and a terminal device (3), in which a content described in hypertext is transmitted from the server system (1) to the terminal device (3) via a network so as to be displayed at the terminal device (3),
wherein the server system includes:
a program storage section (13) for storing at least one UI operation program describing an operation concerning a user interface in connection with displaying the content at the terminal device;
a content storage section (12) for storing the content, wherein the content contains program identification information for identifying a UI operation program to be executed when the content is displayed at the terminal device;
a content transmission section (S503) for transmitting the content stored in the content storage section to the terminal device; and
a program transmission section (S506) for transmitting, in response to a request from the terminal device, one of the at least one UI operation program stored in the program storage section which corresponds to the request, and
the terminal device includes:
a program acquisition requesting section(S406) for making a request to the program transmission section to acquire the UI operation program identified by the program identification information contained in the content transmitted from the content transmission section;
a content displaying section (35) for displaying the content transmitted from the content transmission section; and
a UI operation execution section (34) for executing the operation described in the UI operation program transmitted from the program transmission section.

2. The content transmission system according to claim 1, wherein the program identification information is link information indicating a location at which the UI operation program is stored.

3. The content transmission system according to claim 1, wherein the terminal device further includes:
a default program storage section (32) for storing a default UI operation program; and
an identification information determination section (S405) for determining whether the content transmitted from the content transmission section contains the program identification information or not,
wherein the UI operation execution section executes the operation described in the UI operation program transmitted from the program transmission section if the identification information determination section determines that the program identification information is contained, and executes the operation described in the default UI operation program stored in the default program storage section if the identification information determination section determines that no program identification information is contained.

4. The content transmission system according to claim 1, wherein the terminal device further includes:
a default identification information storage section (32) for storing program identification information for identifying a default UI operation program; and
an identification information determination section (S405) for determining whether the content transmitted from the content transmission section contains the program identification information or not,
wherein the program acquisition requesting section requests the program transmission section for the UI operation program identified by the program identification information contained in the content transmitted from the content transmission section if the identification information determination section determines that the program identification information is contained, and requests the program transmission section for the default UI operation program identified by the program identification information stored in the default identification information storage section if the identification information determination section determines that no program identification information is contained.

5. The content transmission system according to claim 1,
wherein the terminal device further includes a data storage section (32) for storing the content transmitted from the content transmission section and the UI operation program transmitted from the program transmission section,
the content displaying section displays the content stored in the data storage section, and
the UI operation execution section executes the operation described in the UI operation program stored in the data storage section.

6. The content transmission system according to claim 5, wherein the data storage section is capable of storing a plurality of UI operation programs,
the terminal device further including:
a storage determination section (S710) for determining whether the UI operation program identified by the program identification information contained in the content transmitted from the content transmission section is stored in the data storage section or not,
wherein the UI operation execution section executes the operation described in one of the at least one UI operation program stored in the data storage section which is identified by the program identification information contained in the content transmitted from the content transmission section if the storage determination section determines that the UI operation program is stored, and executes the operation described in the UI operation program transmitted from the program transmission section if the storage determination section determines that the UI operation program is not stored.

7. The content transmission system according to claim 1, wherein the terminal device further includes:
a keyword table storage section (81) for storing a keyword table on which a keyword related to the content is associated with the program identification information for identifying the UI operation program to be executed when the content is displayed at the terminal device;
a keyword detection section (S1006) for detecting a keyword related to the content transmitted from the content transmission section; and
a program identification information determination section (S1008) for determining a unit of program identification information corresponding to the keyword detected by the keyword detection section by referring to the keyword table,
wherein the program acquisition requesting section requests the program transmission section for the UI operation program identified by the determined unit of program identification information.

8. The content transmission system according to claim 1, wherein the content stored in the content storage section contains a plurality of units of program identification information,
the terminal device further including:
a program identification information selection section (111) for selecting one of the plurality of units of program identification information contained in the content transmitted from the content transmission section based on a predetermined condition,
wherein the program acquisition requesting section requests the program transmission section for one of the at least one UI operation program which is identified by the unit of program identification information selected by the program identification information selection section.

9. The content transmission system according to claim 1, wherein the content stored in the content storage section contains a plurality of units of program identification information,
the server system further including:
a program identification information selection section(141) for, if the content to be transmitted from the content transmission section contains a plurality of units of program identification information, selecting one of the plurality of units of program identification information based on a predetermined condition; and
a deletion section (141) for, if the content to be transmitted from the content transmission section contains a plurality of units of program identification information, deleting from the content any units of program identification information other than the unit of program identification information selected by the program identification information selection section,
wherein the content transmission section transmits to the terminal device the content from which any units of program identification information other than the unit of program identification information selected by the program identification information selection section have been deleted by the deletion section.

10. The content transmission system according to claim 1,
wherein the server system includes a plurality of servers,
the program storage section and the program transmission section are included in one of the plurality of servers, and
the content storage section and the content transmission section are included in another of the plurality of servers which is not the server including the program storage section and the program transmission section.

11. The content transmission system according to claim 1, the terminal device further including:
a default program storage section (32) for storing a default UI operation program; and
a signature determination section (171) for determining whether a signature is attached to the UI operation program transmitted from the program transmission section or not, the signature being proof of data transmitted from the legitimate server system,
wherein the UI operation execution section executes the operation described in the UI operation program transmitted from the program transmission section if the signature determination section determines that the signature is attached, and executes the operation described in the default UI operation program stored in the default program storage section if the determination section determines that the signature is not attached.

12. A content transmission system comprising a server system (1) and a terminal device (3), in which a content described in hypertext is transmitted from the server system (1) to the terminal device (3) via a network so as to be displayed at the terminal device (3),
wherein the server system includes:
a content storage section (12) for storing the content;
a program storage section (13) for storing at least one UI operation program describing an operation concerning a user interface in connection with displaying the content at the terminal device;
a content table storage section (221) for storing a content table indicating correspondence between the content and a UI operation program to be executed when the content is displayed at the terminal device,
a content transmission section (S503) for transmitting the content stored in the content storage section to the terminal device; and
a program transmission section (S506) for, by referring to the content table stored in the table storage section, transmitting one of the at least one UI operation program stored in the program storage section which corresponds to the content transmitted by the content transmission section, the UI operation program being transmitted together with the content, and
the terminal device includes:
a content displaying section (35) for displaying the content transmitted from the content transmission section; and
a UI operation execution section (34) for executing the operation described in the UI operation program transmitted from the program transmission section.

13. The content transmission system according to claim 12, wherein the terminal device further includes:
a default program storage section (32) for storing a default UI operation program; and
a determination section (S2404) for determining whether the content transmitted from the content transmission section is accompanied by the UI operation program or not,
wherein the UI operation execution section executes the operation described in the UI operation program transmitted from the program transmission section if the determination section determines that the content transmitted from the content transmission section is accompanied by the UI operation program, and executes the operation described in the default UI operation program stored in the default program storage section if the determination section determines that the content transmitted from the content transmission section is not accompanied by the UI operation program.

14. The content transmission system according to claim 12, the terminal device further including:
a default program storage section (32) for storing a default UI operation program; and
a signature determination section (171) for determining whether a signature is attached to the UI operation program transmitted from the program transmission section or not, the signature being proof of data transmitted from the legitimate server system,
wherein the UI operation execution section executes the operation described in the UI operation program transmitted from the program transmission section if the signature determination section determines that the signature is attached, and executes the operation described in the default UI operation program stored in the default program storage section if the determination section determines that the signature is not attached.

15. A server system for transmitting a content described in hypertext to a terminal device via a network so as to be displayed at the terminal device,
wherein the content contains program identification information for identifying a UI operation program to be executed when the content is displayed at the terminal device,
the server system comprising:
a content storage section for storing the content;
a content transmission section for transmitting the content stored in the content storage section to the terminal device;
a program storage section for storing at least one UI operation program describing an operation concerning a user interface in connection with displaying the content at the terminal device; and
a program transmission section for transmitting, in response to a request from the terminal device, one of the at least one UI operation program stored in the program storage section which corresponds to the request.

16. A server system for transmitting a content described in hypertext to a terminal device via a network so as to be displayed at the terminal device, the server system comprising:
a content storage section for storing the content;
a program storage section for storing at least one UI operation program describing an operation concerning a user interface in connection with displaying the content at the terminal device;
a content table storage section for storing a content table indicating correspondence between the content and a UI operation program to be executed when the content is displayed at the terminal device,
a content transmission section for transmitting the content stored in the content storage section to the terminal device; and
a program transmission section for, by referring to the content table stored in the table storage section, transmitting one of the at least one UI operation program stored in the program storage section which corresponds to the content transmitted by the content transmission section, the UI operation program being transmitted together with the content.

17. A terminal device for receiving a content described in hypertext from a server system via a network, the terminal device comprising:
a content displaying section for displaying the content transmitted from the server system; and
a UI operation execution section for executing the operation described in the UI operation program transmitted from the server system.

18. The terminal device according to claim 17, further comprising:
a program acquisition requesting section for making a request to the program transmission section to acquire the UI operation program identified by the program identification information contained in the content transmitted from the server system.

19. A method for transmitting a content described in hypertext from a server system to a terminal device via a network,
wherein the server system previously stores the content and at least one UI operation program describing an operation concerning a user interface in connection with displaying the content at the terminal device, wherein the content contains program identification information for identifying a UI operation program to be executed when the content is displayed at the terminal device,
the method comprising the steps of:
transmitting the previously stored content to the terminal device; and
in response to a request from the terminal device, transmitting one of the at least one previously stored UI operation program which corresponds to the request.

20. A method for transmitting a content described in hypertext from a server system to a terminal device via a network,
wherein the server system previously stores the content, at least one UI operation program describing an operation concerning a user interface in connection with displaying the content at the terminal device, and a content table indicating correspondence between the content and a UI operation program to be executed when the content is displayed at the terminal device,
the method comprising the step of:
transmitting the previously stored content to the terminal device, and
by referring to the content table, transmitting one of the at least one previously stored UI operation program which corresponds to the content transmitted to the terminal device, the UI operation program being transmitted together with the content.
